(19) Europäisches Patentamt

European Patent Office

Office européen des brevets

(11) **EP 2 732 355 B1**

(12) **EUROPEAN PATENT SPECIFICATION**

(45) Date of publication and mention
of the grant of the patent:
**28.08.2019 Bulletin 2019/35**

(21) Application number: **12748042.4**

(22) Date of filing: **11.07.2012**

(51) Int Cl.:
***G06F 3/01*** (2006.01)     ***G06F 3/0488*** (2013.01)

(86) International application number:
**PCT/FI2012/050725**

(87) International publication number:
**WO 2013/007882 (17.01.2013 Gazette 2013/03)**

(54) **HAPTIC DEVICE WITH TOUCH GESTURE INTERFACE**

HAPTISCHE VORRICHTUNG MIT BERÜHRUNGSGESTENSCHNITTSTELLE

DISPOSITIF HAPTIQUE DOTÉ D'UNE INTERFACE TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2011   US 201161506900 P**
**15.05.2012   US 201261647033 P**
**03.07.2012   US 201213540734**

(43) Date of publication of application:
**21.05.2014   Bulletin 2014/21**

(73) Proprietor: **Senseg Ltd**
**02600 Espoo (FI)**

(72) Inventors:
• **MÄKINEN, Ville**
**FI-02720 Espoo (FI)**
• **LINJAMA, Jukka**
**FI-02200 Espoo (FI)**
• **NIKANDER, Pekka**
**02600 Espoo (FI)**
• **BENGTSSON, Jonas**
**S-21128 Malmö (SE)**

(74) Representative: **Kolster Oy Ab**
**(Salmisaarenaukio 1)**
**P.O. Box 204**
**00181 Helsinki (FI)**

(56) References cited:
**EP-A2- 2 138 928        US-A1- 2007 236 474**
**US-A1- 2009 085 878     US-A1- 2009 231 271**
**US-A1- 2010 231 367**

**Description**

TECHNICAL FIELD

The subject matter disclosed herein generally relates to electronic devices. Specifically, the present disclosure addresses a haptic device with a touch gesture interface.

BACKGROUND

Manual input devices, such as joysticks and mice, are frequently complemented by means for providing tactile sensations such that the manual input devices provide tactile feedback to their users. Contemporary tactile feedback devices generate tactile stimulation through use of moving or vibrating mechanical members. A problem that may affect such devices is that moving or vibrating mechanical members may be bulky, unreliable, or difficult to control.

US2010231367 A1 discloses systems and methods for providing composite haptic effects on touch-enabled computing devices.

As the user interacts with the device, one or more actuators are used to provide tactile effects, including composite haptic effects. A composite haptic effect can comprise an effect that utilizes a variation in a coefficient of friction of a touch surface along with one or more other haptic outputs presented in combination with the variation in coefficient of friction.

The present invention is defined by the appended claims. Particular embodiments are set out in the respective dependent claims. Embodiments which do not fall within the scope of the claims do not describe part of the present invention.

BRIEF DESCRIPTION OF THE DRAWINGS

Some embodiments are illustrated by way of example and not limitation in the figures of the accompanying drawings.

FIG. 1-7 are diagrams depicting a haptic device that fully or partially implements a "hold and feel" mode, according to various example embodiments.

FIG. 8-9 are face views illustrating a portion of a virtual keyboard displayed on a screen of a haptic device, according to some example embodiments.

FIG. 10-11 are conceptual diagrams illustrating general principles that may be used in a device, such as a haptic device, according to some example embodiments.

FIG. 12 is a conceptual diagram illustrating components of a haptic device, according to some example embodiments.

FIG. 13 is an electrical diagram illustrating a configuration of a haptic device, according to some example embodiments.

FIG. 14 is an exploded view illustrating the configuration of a haptic device, according to some example embodiments.

FIG. 15 is an electrical diagram illustrating a further configuration of a haptic device, according to some example embodiments.

FIG. 16 is an exploded view illustrating the further configuration of a haptic device, according to some example embodiments.

FIG. 17 is a block diagram illustrating a haptic device with a passive grounding arrangement, according to some example embodiments.

FIG. 18 is a block diagram illustrating a haptic device with an active grounding arrangement, according to some example embodiments.

FIG. 19 is an electrical diagram illustrating a passive capacitor arrangement for a haptic device, according to some example embodiments.

FIG. 20 is a graph illustrating attenuation of the passive capacitor arrangement for a haptic device, according to some example embodiments.

FIG. 21 is an electrical diagram illustrating an active capacitor arrangement for a haptic device, according to some example embodiments.

FIG. 22 is a graph illustrating attenuation of the active capacitor arrangement for a haptic device, according to some example embodiments.

FIG. 23 is an electrical diagram illustrating a haptic device, according to some example embodiments.

FIG. 24 is a diagram depicting a haptic device in the example form of a tactile stimulation apparatus, according to some example embodiments.

FIG. 25-28 are diagrams of various composite section structures and components that may be included in tactile stimulation apparatuses, according to various example embodiments.

FIG. 29-32 are circuit diagrams illustrating various example embodiments of a tactile stimulation apparatus.

FIG. 33 is a circuit diagram depicting a distribution of an electric field-generating potential in capacitive couplings when a tactile stimulation apparatus is grounded, in accordance with an example embodiment.

FIG. 34 is a circuit diagram depicting another example embodiment of a tactile stimulation apparatus having a floating voltage source.

FIG. 35 is a circuit diagram illustrating another example embodiment of a tactile stimulation apparatus.

FIG. 36 is a diagram illustrating a surface of a semiconducting region, according to various example embodiments.

FIG. 37 is a schematic diagram depicting an example embodiment of a tactile display device having a single electrode that produces electrosensory sensations based on a location of a body member, according to various example embodiments.

FIG. 38-39 are diagrams of the various regions of materials that may comprise different example embodiments of a touch screen panel.

FIG. 40 is a diagram of an exemplary embodiment of circuitry configured to charge the touch screen panel depicted in FIG. 39.

FIG. 41-43 are diagrams depicting example embodiments of composite sections that comprise a tactile stimulation apparatus in which a composite section is provided in a grounding connection.

FIG. 44-45 are diagrams depicting a tactile stimulation apparatus having a connector that connects a semiconducting region of a touch screen panel to a voltage source, in accordance with an example embodiment.

FIG. 46 is a schematic diagram illustrating various components of a haptic device in the example form of a tactile stimulation apparatus, according to some example embodiments.

FIG. 47-48 are block diagrams illustrating components of a haptic device, according to some example embodiments.

FIG. 49 is a flowchart illustrating operations in a method of operating a haptic device with a touch gesture interface, according to various example embodiments.

FIG. 50 is a block diagram illustrating components of a machine, according to some example embodiments, able to read instructions from a machine-readable medium and perform any one or more of the methodologies discussed herein.

DETAILED DESCRIPTION

Example methods and systems (e.g., devices) are directed to devices, such as haptic devices (e.g., a touch input device or tactile feedback device). Examples merely typify possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

Example embodiments describe various interaction techniques that allow a user to explore, in terms of tactile feelings, the information content being displayed on a touch screen, or on a screen that is used together with a touch pad, without requiring the user to look at the screen and without requiring auditory or other output. As explained below, the interaction techniques enable adding to the graphical user interface of a computer program, or some information content, such as a web page being displayed in a web browser, or other any suitable application, a mode where the displayed information can be explored through active hand motions that cause a digital information processing system to generate tactile sensations, wherein the generated sensory stimulation depends on the information being displayed on the screen and on the user's actions.

Touch-screen devices and touch-pad devices may interpret various user "gestures" as input elements. For example, the user may place one or more fingers on the touch surface, and then move the finger or fingers in specific patterns. In many devices, a user may perform a so-called "pinch-zoom" gesture by placing two fingers on the screen, and then moving the fingers simultaneously either towards each other or away from each other, causing the image on the screen to be zoomed out or in, respectively. Another example is a "two-finger scroll" gesture in which the user may place two fingers on a touch pad in order to move the information content that is being displayed. Yet another example is a "Select/Copy/Paste" menu that such devices may show if the user places a finger on a text field and lets it stay there stationary without moving for a while (e.g., a so-called "long press" gesture). As a response to this "long press" gesture, a device may show a menu that allows text to be copied between text fields within an application and between applications. However, many touch-screen devices and touch-pad devices may not able to exert high-precision tactile sensory stimulation as a response to a user touching the device.

Many computer programs that may be executed on touch-screen devices, including many web browsers, are based on an interaction method in which a sliding finger is assumed to move the information "underneath" the touch-screen. That is, when a user places their finger on the screen and moves the finger, the display contents are updated to create an illusion that there is a larger surface "under" the screen, with the screen showing only a portion of that surface, and that the finger "touches" the underlying surface and moves it. For example, when a smart phone is used to display a regular web page, the web page may be rendered into a large image of which only small part of the page can be shown on the screen at a time. Then, when the user moves the finger on the screen, the content of the web page is moved relative to the display so that the user can see a different part of the web page. This methodology of interaction may be referred to as a "grab-and-move" mode in which a user places her finger on the screen and slides the finger, and the information content displayed appears to move together with the finger. This "grab-and-move" method may be considered as analogous to having a sheet of paper on a smooth table. Once a person puts a finger on the paper and then moves the finger, the whole sheet of paper moves together with the finger but the finger's location relative to the sheet of paper does not move.

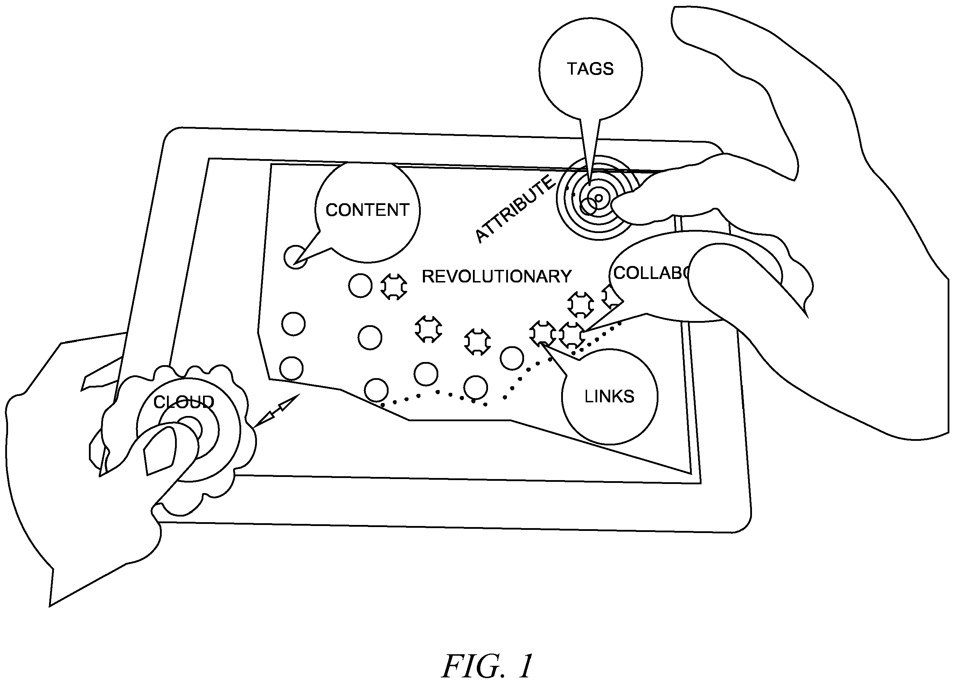

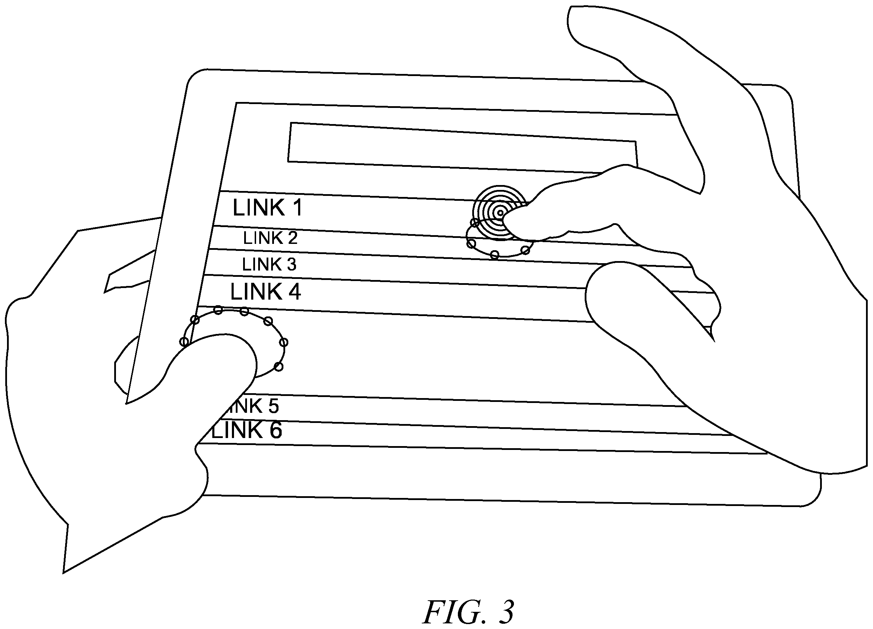

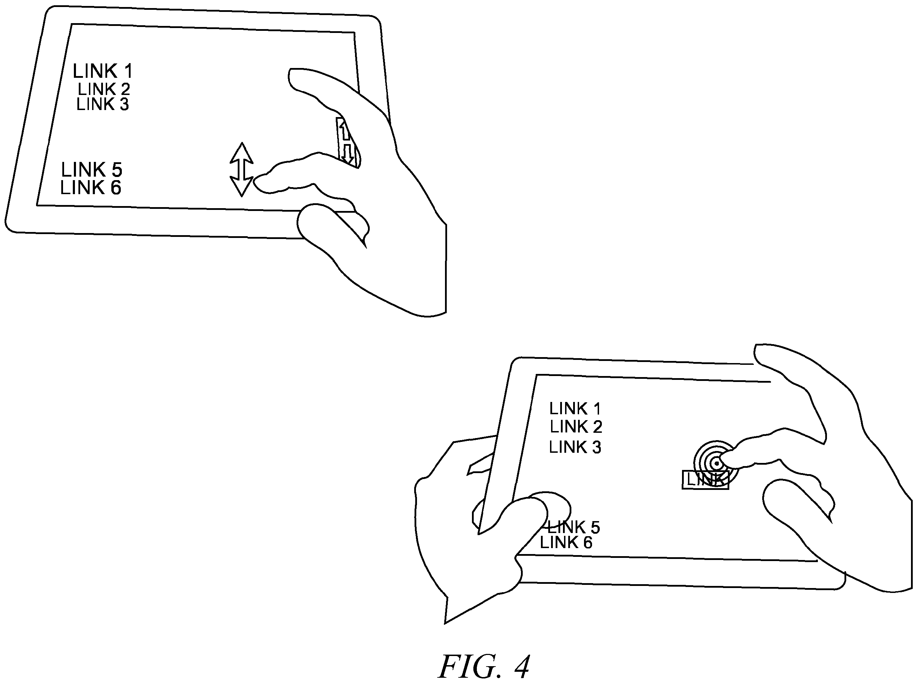

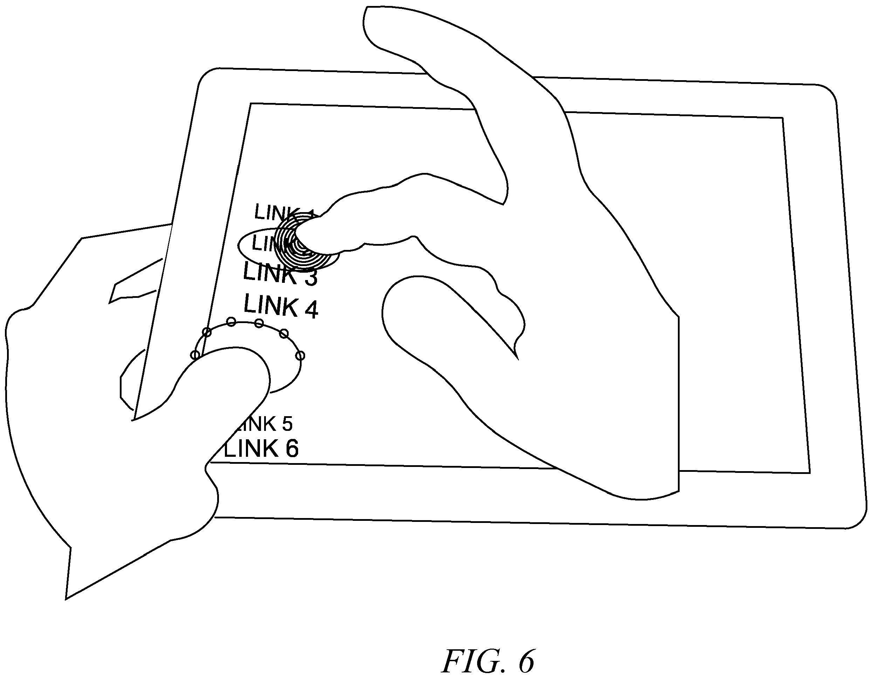

Additionally, an interaction method may allow a user to "explore" the "tactile feeling" of the information being displayed on a digital display. This methodology can be referred to as a "hold-and-feel" mode, which may also be called an "explore mode." FIG. 1-7 are diagrams depicting various example embodiments of a device (e.g., a haptic device) that fully or partially implements a "hold and feel" mode, as discussed above. In general, the user may first perform a specific "gesture" to inform the device to "hold" the display, in order to "explore" or "feel" the information presented on the display, instead of "moving" the information with respect to the display. As an example, the default user interaction method of the device may be the "grab-and-move" mode (e.g., as shown in upper left portion of FIG. 4), but a specific user action may cause the device to enter a "hold-and-feel" mode or method of interaction (e.g., as shown in the lower right portion of FIG. 4).

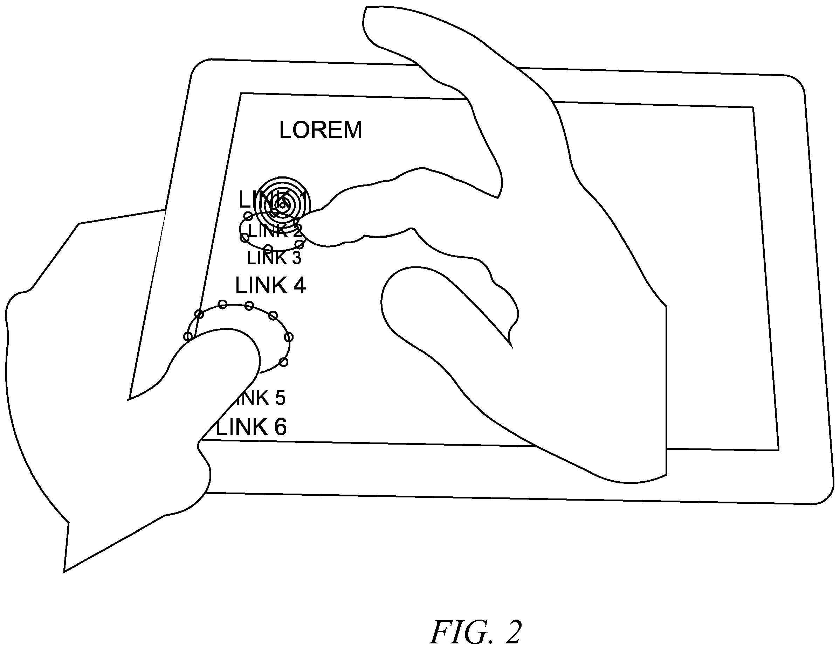

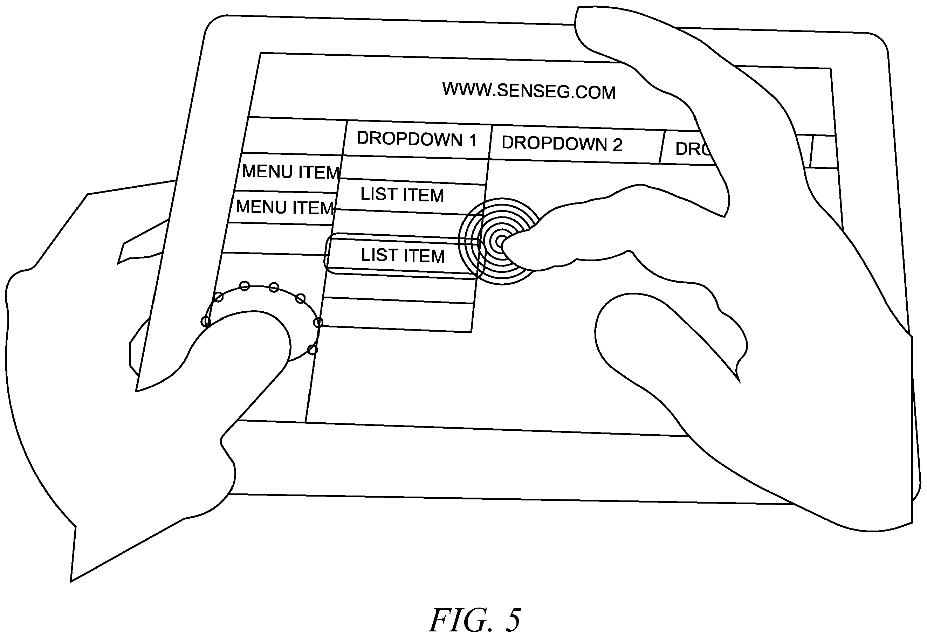

In one example embodiment, to enter the "hold-and-feel" mode, a specific "gesture," such as pressing down one finger on the side of the screen, will "lock" the information content so that the display contents are no longer moved as the user slides another finger over the screen. FIG. 1 and the lower portion of FIG. 4 illustrate examples of a user's left thumb pressing down on a corner of a screen, while the user's right index finger slides over another portion of the screen. Such a gesture may also be distinguished from other two-finger and multi-finger gestures, such as the "pinch zoom" or "two-finger scroll." When an appropriate tactile sensory stimulation solution and a set of appropriate software instructions are implemented in a haptic device, this "hold-and-feel" feature may allow the user to "feel" some graphical or semantic "object" (e.g., a link, as shown in FIG. 2) on the screen, as variations of surface texture. As shown in FIG. 2-3, a user may feel in his fingertip when his fingertip is on top of a link on a web page, or whether an image being displayed on a web page is linked or not, or what elements of a web page may be interacted with, for example, to display a new pop-up menu (e.g., as shown in FIG. 5).

This "hold-and-feel" mode may be analogous to having a sheet of paper on a smooth table. Once a person puts a finger firmly somewhere on the sheet of paper (e.g., at a corner or a side of the sheet) and uses another finger to slide on top of the paper, the person may feel with the sliding finger the texture of the paper. For example, if the sheet of paper had Braille writing, a person skilled with Braille may be able to read the Braille writing with the "hold-and-feel" method while the "grab-and-move" method would not reveal the Braille text.

In various example embodiments, the "gesture" includes the user placing his thumb, or other finger, at a specific position or any of a number of specific positions on the screen (e.g., of a haptic device), and keeping that finger stationary, thereby "holding" the information content stationary with respect to the screen. Thereafter the user may move one or more other fingers over the screen, allowing the information content being displayed on the screen to be felt (e.g., via one or more haptic effects).

In a tablet computer implementation, the specific positions may include the left and right sides of the screen (e.g., about 1-2 cm from the screen border). Hence, the user may place his thumb on the left or right side of the screen, and then slide a finger of the other hand over the screen, in response to which the device may provide or exert tactile stimulation onto the finger.

In a handheld (e.g., mobile phone) implementation, this specific "gesture" may be physical button or switch, or a touch-sensitive position or set of positions on the bottom or sides of the device. This may allow the user to turn the switch, press the button, or place one of the fingers on one of the specific positions, and then slide the thumb of the same hand over the screen, as above.

In some example embodiments, the interaction method may involve the body member that is used to "hold" the information content being moved or slid to any one or more of the specific positions in some specific way. For example, the user may need to slide the thumb from the border of the screen to the specific position in order to activate the "hold-and-feel" mode.

The software controlling the device (e.g., a haptic device) may be programmed to make a distinction between the gesture to enter "hold-and-feel" and other two or multi-finger gestures. For example, the software may consider the gesture as a "hold-and-feel" activation gesture if the touch position being reported is the only one currently reported, if there has been no other touch activity for a while before this gesture, if the touch position falls within one or more pre-specified positions (e.g., as one or more sides of the screen), if there is at least a predefined delay from the time the first touch position is being reported to the time a second touch position is first reported, or if the second touch position lasts for at least a minimum pre-defined time, various other criteria, or any suitable combination thereof.

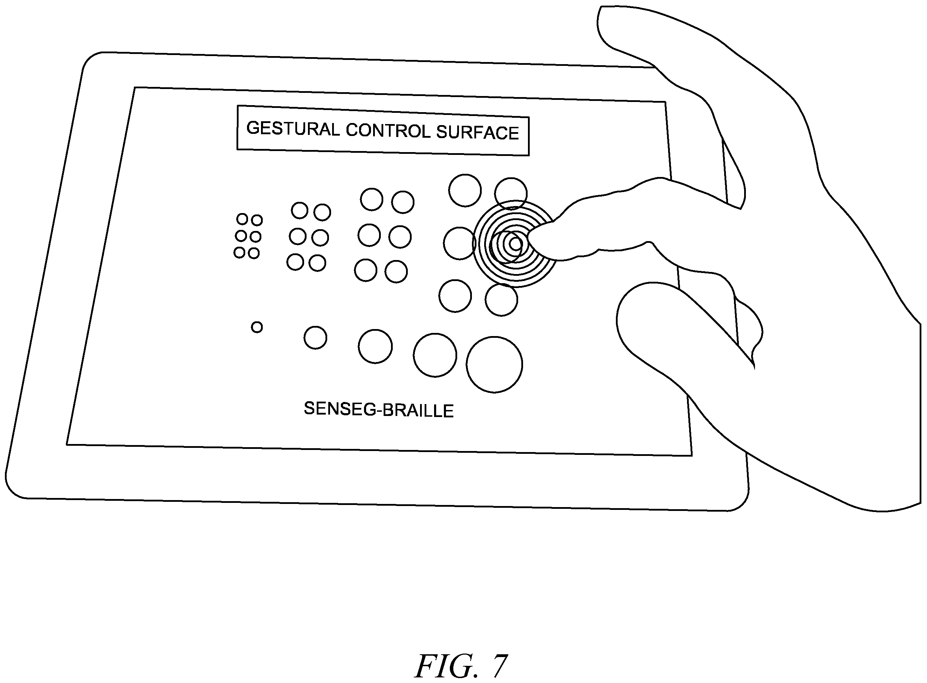

In the "hold-and-feel" mode, the device may generate tactile sensory stimulation output in a way to create an illusion of varying texture, although, in some example embodiments, no tactile sensory stimulation is generated. As shown in FIG. 7, such varying texture may form all or part of information displayed in Braille. With electrostatic vibration technology discussed below, the tactile stimulation may be felt on the moving fingertip and may be felt not at all or not so clearly on the stationary finger, even if the same output is, in the physical sense, applied over the whole touch surface and both fingers touch the same surface. The relative strength of the tactile stimulation felt by one finger or the other can be tuned with the tactile content as a finger's sensitivity to stimuli may be different depending whether it is stationary or moving. As an example, a high frequency content of around 200 Hz may be better felt by stationary finger, whereas lower frequency content, for example in the region of 40 Hz, may be felt particularly well by a moving finger, but not by a stationary finger. Hence, the software controlling the sensory stimulation may track the movements of the second touch position, as reported by the haptic device (e.g., as a touch input device), and generate the tactile output in such a way that the generated feeling matches with the information content being displayed under the second touch position.

The "hold-and-feel" mode can be deactivated when the user performs another gesture, such as removing their finger or thumb from a pre-defined position, which it has been touching while being in the "hold-and-feel" mode. In order to avoid accidental leaving of the "hold-and-feel" mode, the software may ignore a momentary release of the stationary touch position as an unintended gesture, and ignore it.

In an alternate embodiment, the tactile stimulation that the user feels on his finger may be configured to differ from (e.g., fail to coincide with or fail to correspond to) the visual information being displayed on the screen. This may be useful in various contexts. For example, this may allow a user to find "hidden" information in a game. As an example, the tactile stimulation may "reveal" where a treasure is hidden on a map within a game, or indicate which of a number of options is more valuable than the others. This situation is illustrated FIG. 1, in which a tablet-shaped device presents visual information, some of which is visually perceptible (e.g., visible) by a user, some of which is visually imperceptible (e.g., hidden) by the user, some of which is tactilely perceivable (e.g., "feelable") by a body member of the user (e.g., the user's fingertip), and some of which is not tactilely perceivable (e.g., not "feelable") by the body member of the user.

In yet another embodiment, while in the "hold-and-feel" mode, the software may interpret additional gestures. For example, if the user raises his second finger and then momentarily "taps" (e.g., touch and raise) with the finger, these actions may be interpreted as the user wanting to activate the interaction element, such as a web link, under the finger. The situation is illustrated in FIG. 2-6.

In general, while in the "hold-and-feel" mode with a stationary finger touching the surface at a predefined position (e.g., among multiple pre-defined positions), the software may interpret any two-finger gesture as a plain or modified one-finger gesture, any three-finger gesture as a plain or modified two-finger gesture, etc. For example, while continuing to keep a thumb on the side of a screen, the user may use two fingers of the other hand to zoom and pan the information content.

Such re-interpretation of multi-finger gestures into other multi-finger gestures may be arranged so that the result allows the user to have more precise control over the information content being displayed. For example, the software may interpret a "three-finger-pinch-zoom" (e.g., a stationary thumb with two fingers pinching) as a "slow" zoom, where the zooming effect may be much smaller than in a regular pinch zoom.

If the "hold-and-feel" gesture does not involve keeping a finger or thumb stationary on the touch surface, the software may interpret the regular single and multi-touch gestures in a different way than in the "normal" or "hold-and-grab" mode, thereby allowing the user to have more precise control, as mentioned above.

The gesture used to enter the "hold-and-feel" mode may be some gesture (e.g., a double tap on a screen corner). The gesture used to leave the "hold-and-feel" mode may be some corresponding gesture (e.g., double tapping the same screen corner again, or double tapping a different corner of the screen).

In the "hold-and-feel" mode, the locking feature need not completely lock for the "underlying" screen contents to the user's finger. That is, instead of keeping the information content stationary while in the "hold-and-feel" mode, the information content may be moved "slowly" under the finger with some "inertia," "slippage," or "drag." As an alternative, some specific gesture, such as keeping one finger stationary or two fingers sliding together, may be used to move the information content around while still not leaving the "hold-and-feel" mode.

Example embodiments may be implemented by adding a few new software components to existing touch-input and tactile-sensory-output enabled software. These components may include any one or more of the following: a component used (e.g., configured) to detect, distinguish, and interpret the gesture used to enter the "hold-and-feel" mode; a component used to generate tactile sensory output signals that depend on the information being displayed on the screen and the position of the finger or fingers on the touch input surface; a component used to modify and re-interpret touch events while in the "hold-and-feel" mode; and a component used to detect, distinguish, and interpret a gesture used to leave the "hold-and-feel" mode.

For example, such functions may be implemented by modifying or overriding an *onTouchEvent* callback method, such as in a *WebView* class. As another example, in a haptic device that has or executes a web browser, the functions may be implemented by modifying or overriding appropriate callback methods. For example, in browsers based on Objective-C, it may be possible to dynamically override any Objective-C method.

Various example embodiments described herein may provide a set of usability and accessibility enhancements. For example, a haptic device may provide for a more intuitive browsing by enabling the user to feel active elements under the finger without focusing on that spot on the screen. By providing a complementary dimension to the graphical information of the screen, more information can be conveyed to the user. Various example embodiments of a haptic device may be used in conjunction with a variety of different haptic effects or tactile feedback technologies capable of producing forces, vibrations, motions, or any suitable combination thereof, to a body member of a user. Some example embodiments of the haptic device may be embodied in a tactile stimulation apparatus that uses mechanical stimulation. Other example embodiments of the haptic device may be embodied in a tactile stimulation apparatus that generates electrosensory sensation to a body member, the technology of which is explained in more detail below.

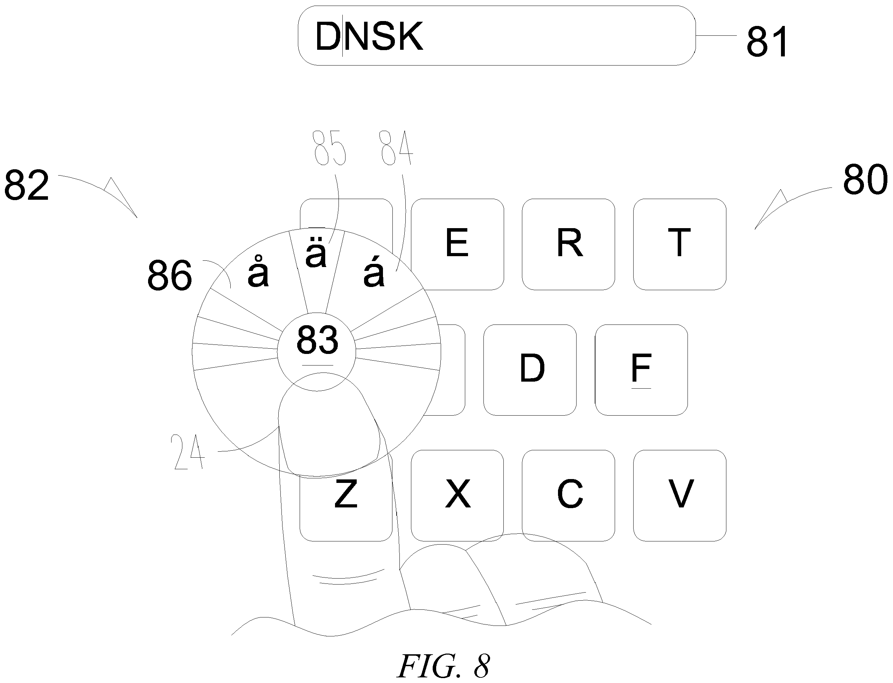

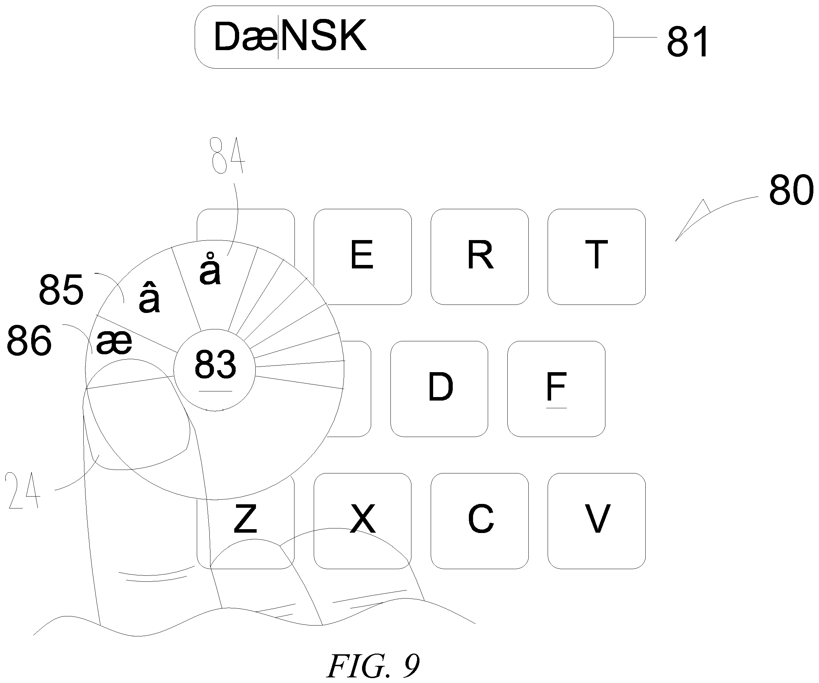

FIG. 8-9 are face views illustrating a portion 82 of a virtual keyboard 80 displayed on a screen of a haptic device, according to some example embodiments. The portion 82 of the virtual keyboard 80 may be displayed in response to a "long press" gesture. In particular, the "long press" gesture may be the gesture used to enter an example embodiment of the "hold-and-feel" mode. For example, as shown in FIG. 8, a "long press" by a user's finger 24 over a letter (e.g., "A") in the virtual keyboard 80 may activate the "hold-and-feel" mode with respect to a menu 83 (e.g., a submenu or pop-up menu) of selectable variants 84, 85, and 86 of that letter (e.g., international characters). FIG. 8 additionally shows a text entry window 81 in which one of the selectable variants 84, 85, or 86 may be displayed after selection by the user. As shown in FIG. 9, the displayed menu 83 may be navigated by sliding the finger 24 to a selected variant (e.g., variant 86) of the letter and releasing or tapping to select that variant of the letter.

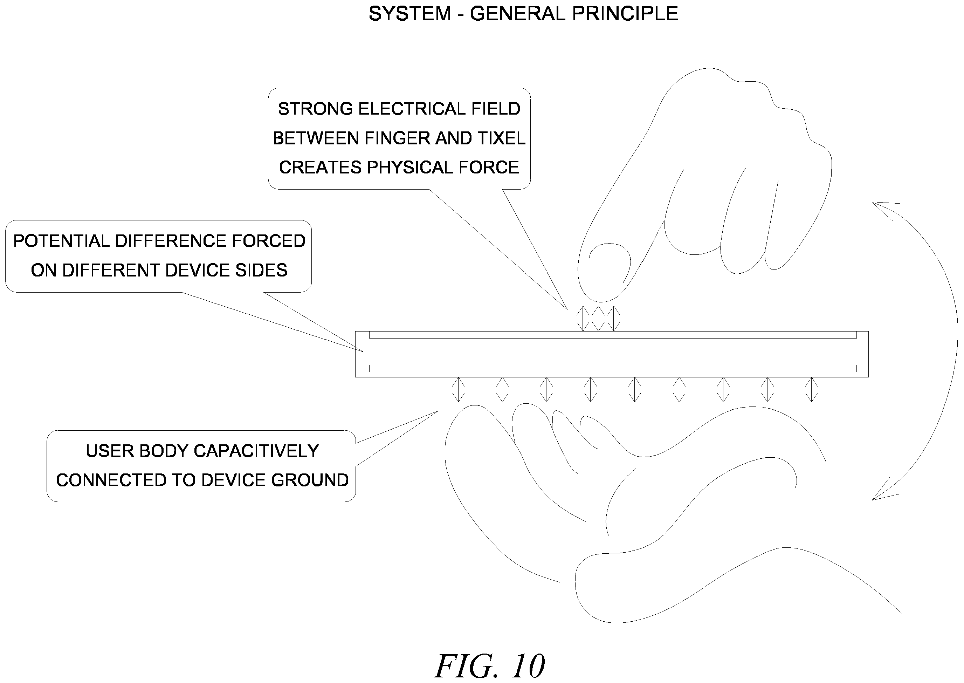

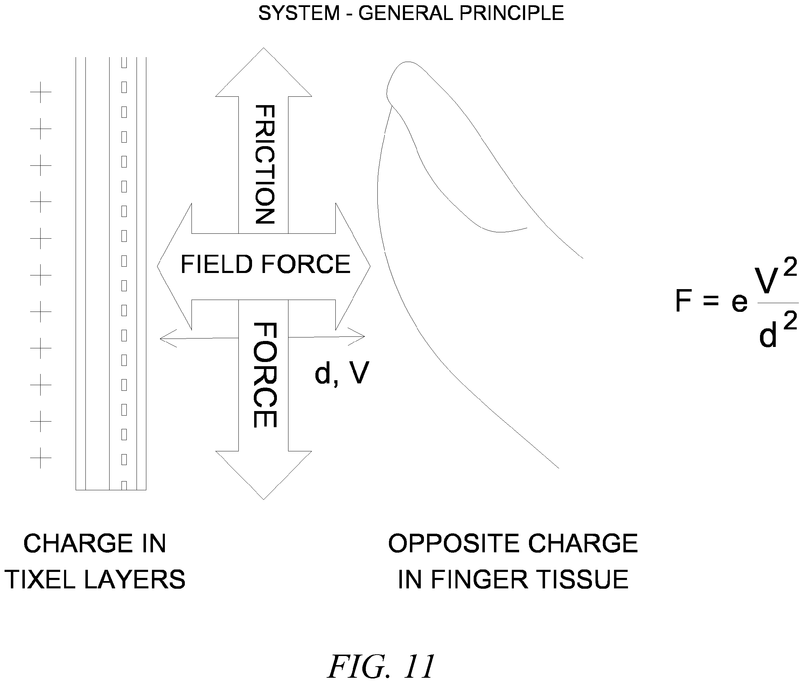

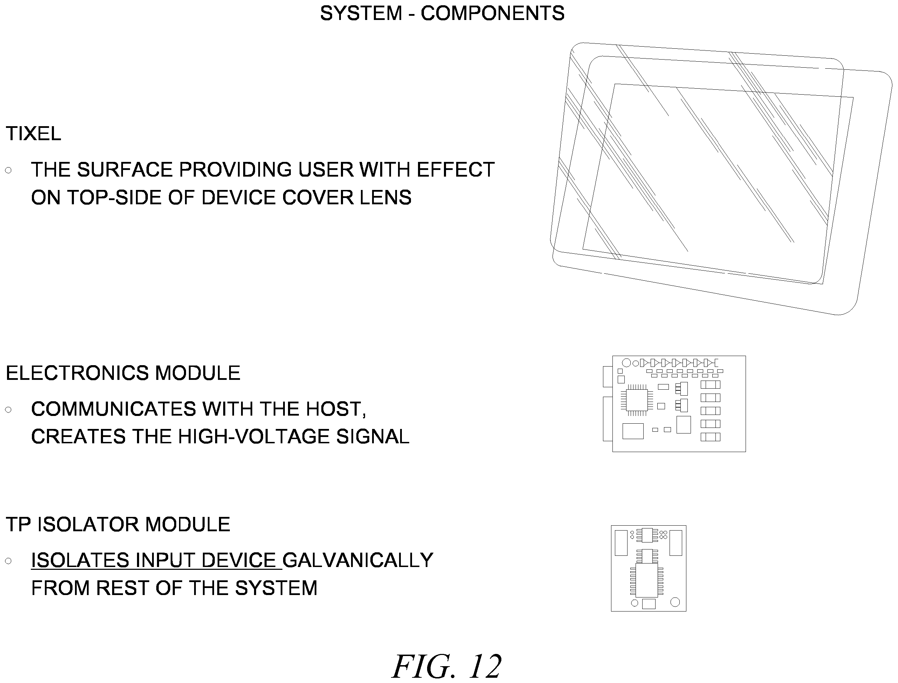

FIG. 10-11 are conceptual diagrams illustrating general principles that may be used in a device, such as a haptic device, according to some example embodiments. FIG. 12 is a conceptual diagram illustrating components of a haptic device, according to some example embodiments.

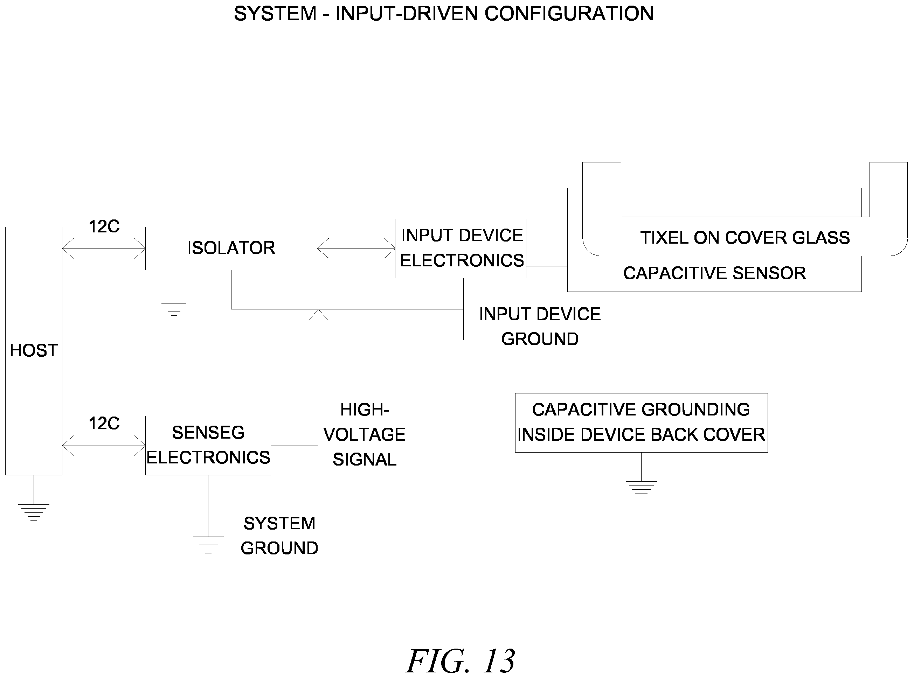

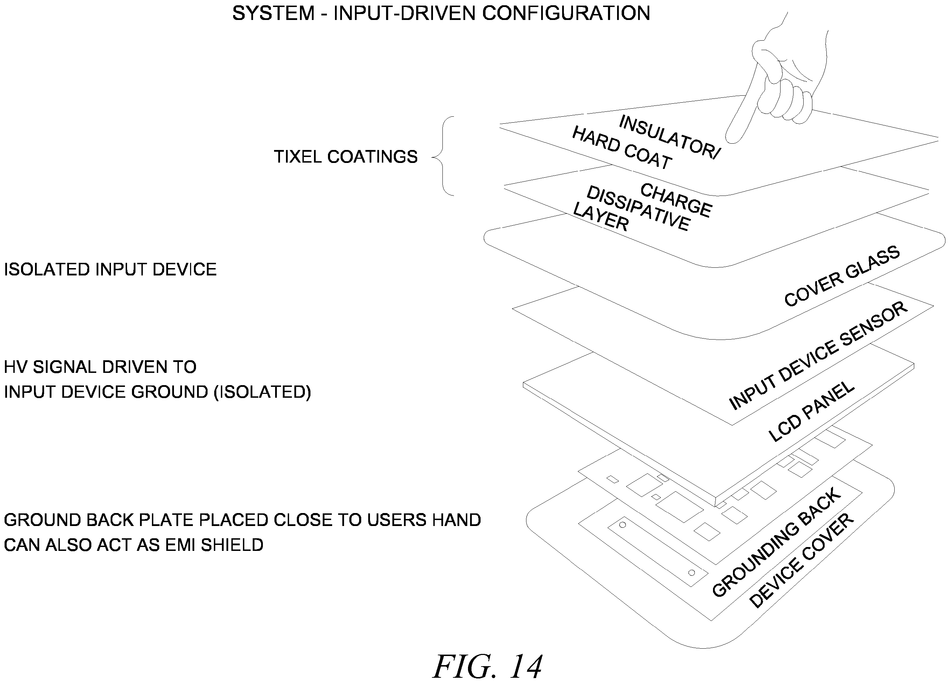

FIG. 13 is an electrical diagram illustrating an input-driven configuration of a haptic device, according to some example embodiments. FIG. 14 is an exploded view illustrating the input-driven configuration of a haptic device, according to some example embodiments. According to various example embodiments, a cover glass of a device (e.g., an input device) may function as a substrate layer (e.g., 200-500 micrometers thick) upon which a semiconductive (e.g., chart-dissipative) layer may lie or be deposited (e.g., as a coating or dopant). The semiconductive layer may be tens of micrometers in thickness. An insulative layer (e.g., 5 micrometers thick) may lie or be deposited upon the semiconductive layer. The insulative layer may be referred to as a "hard coat." Moreover, a hydrophobic layer may lie or be deposited upon the insulative layer, or hydrophobic properties may be inherent in the insulative layer.

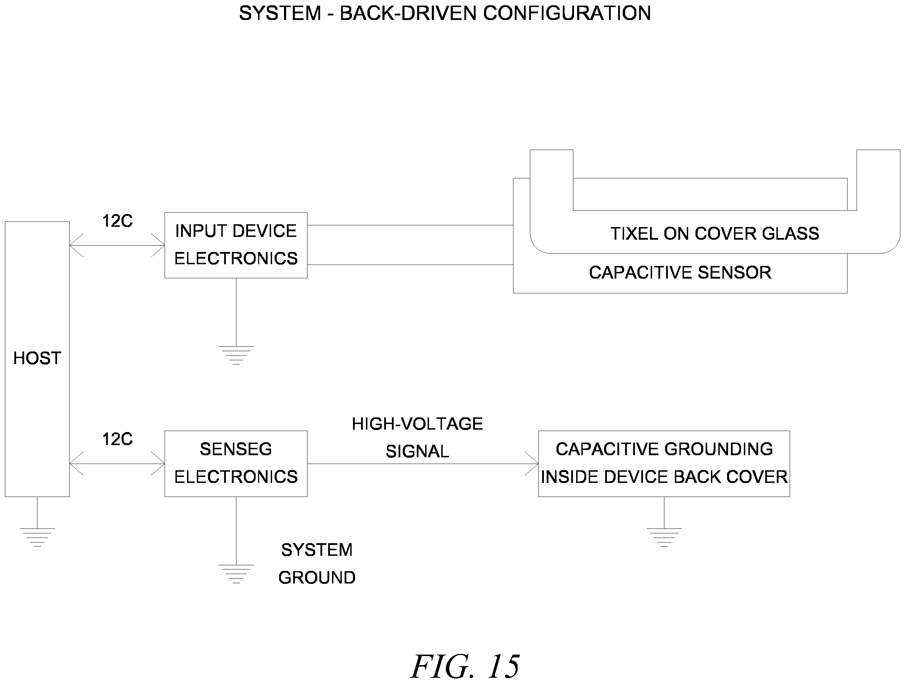

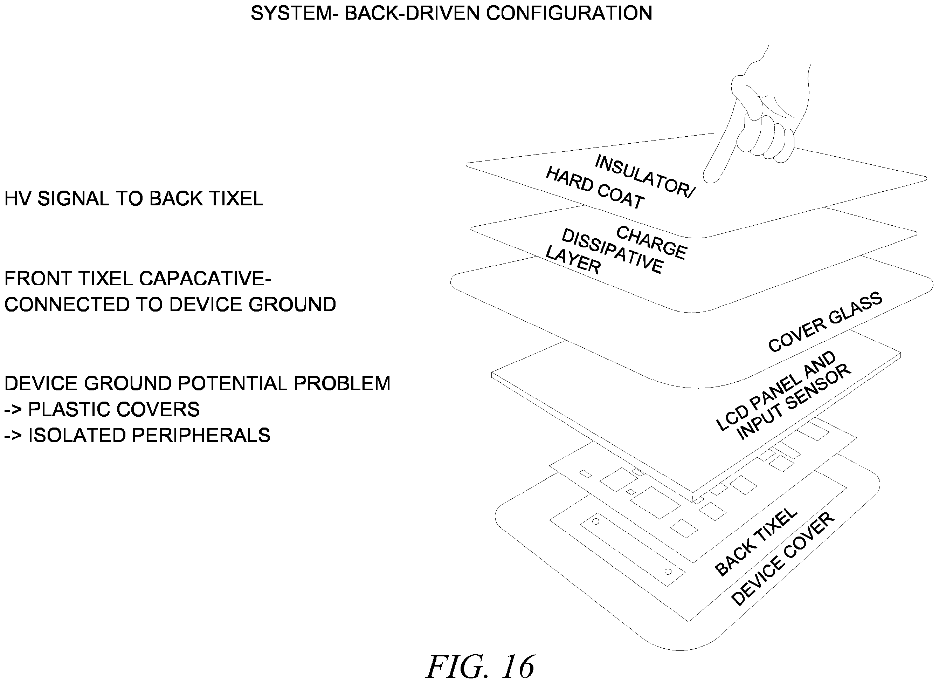

FIG. 15 is an electrical diagram illustrating a back-driven configuration of a haptic device, according to some example embodiments. FIG. 16 is an exploded view illustrating the back-driven configuration of a haptic device, according to some example embodiments. According to various example embodiments, a cover glass of a device (e.g., an input device) may function as a substrate layer (e.g., 200-500 micrometers thick) upon which a semiconductive (e.g., chart-dissipative) layer may lie or be deposited (e.g., as a coating or dopant). The semiconductive layer may be tens of micrometers in thickness. An insulative layer (e.g., 5 micrometers thick) may lie or be deposited upon the semiconductive layer. The insulative layer may be referred to as a "hard coat." Moreover, a hydrophobic layer may be lie or be deposited upon the insulative layer, or hydrophobic properties may be inherent in the insulative layer.

Capacitive input devices may use dedicated circuitry to detect changes in the capacitive environment of sensor lines printed on the glass surface of a display screen. For this purpose, the measurement circuit may utilize a good, low impedance ground reference. In a so-called "input-driven" configuration of the Senseg haptic system (e.g., haptic device), the potential of the input device may be pulsed up to several kilovolts against a device (e.g., tablet PC) chassis. In order to do this, both the signal and supply voltage lines of the input device may be isolated from the chassis either inductively, optically, or capacitively. The isolation may break the connection between the input device measurement electronics and the device chassis, which, in other words, may reduce the "ground mass" into a fraction thereof. This may have the effect of reducing the sensitivity of the input device significantly. Hence, it may be helpful to provide a low-impedance ground for the input device.

One way to do this involves using a low-impedance amplifier for driving the high-voltage pulses. However, because of the kilovolt-level, the use of an amplifier may not feasible. Instead, the voltage may be generated using a voltage multiplier, the output impedance of which might not be easily controllable.

The input device may scan the lines at about 200 kHz frequency, which may be significantly higher at the spectrum than the frequency content of the Senseg stimulation pulse train, which might not contain frequencies above, say, a few kHz. Thus, some example embodiments place a capacitor across the isolation, so that the impedance at low frequencies (e.g. haptic feedback) may be relatively high, but the impedance at higher frequencies (e.g., in the input device measurement range) may be sufficiently low to provide a suitable ground reference.

The above-mentioned capacitance works in practice, but might not be an optimal solution in certain circumstances, because the capacitor may increase the load to the high-voltage generator output. This may result in excessive power consumption and may encourage the use of larger and more expensive capacitive and inductive components. Another issue with such a capacitive bypass may be that the ground current through the capacitor at the edges of the pulses may interfere with sensitive electronics parts, like audio amplifiers on the mother board.

Various example embodiments of a haptic device may use an active feedback arrangement to provide, for example, a low-impedance ground for the input device at high frequencies and low amplitudes. For low-frequency, high amplitude pulses, the same circuit may exhibit a relatively high-impedance load and possibly a non-linear load. Within a linear region, this circuit may exhibit frequency-dependent synthetic capacitance, which may provide a much higher difference between high-frequency and low-frequency impedances compared to a simple capacitor.

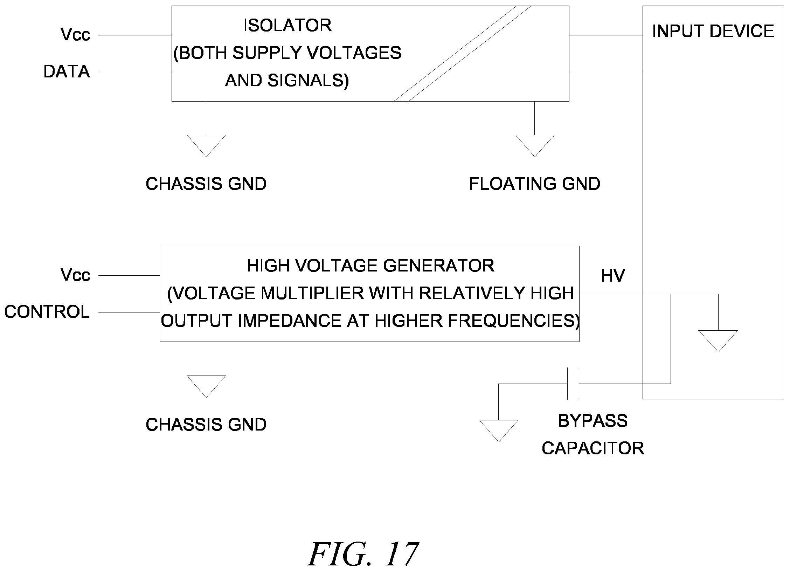

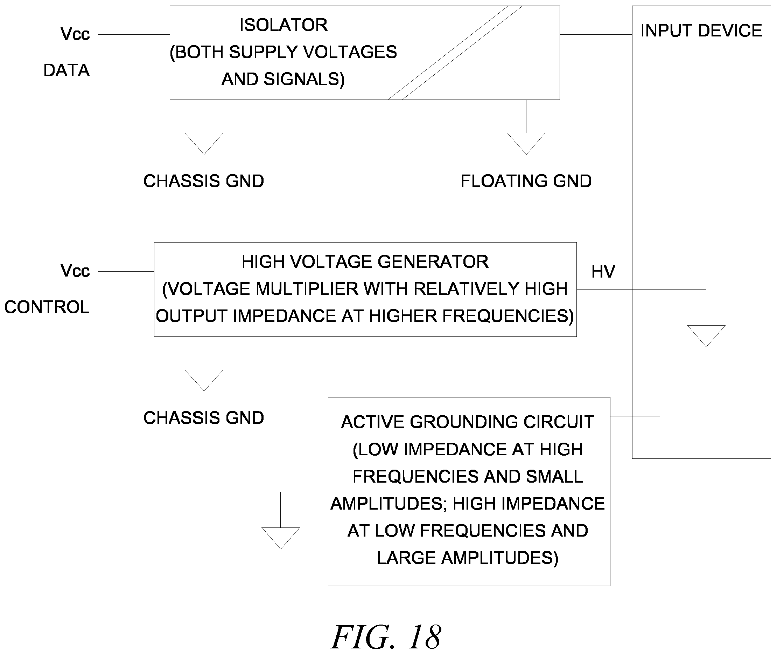

FIG. 17 is a block diagram illustrating an example system in the form of a haptic device with a passive grounding arrangement, according to some example embodiments. FIG. 18 is a block diagram illustrating an example system in the form of a haptic device with an active grounding arrangement, according to some example embodiments.

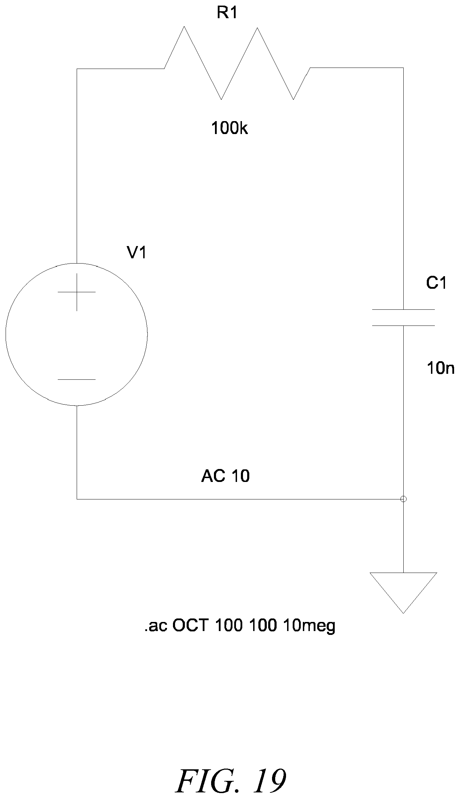

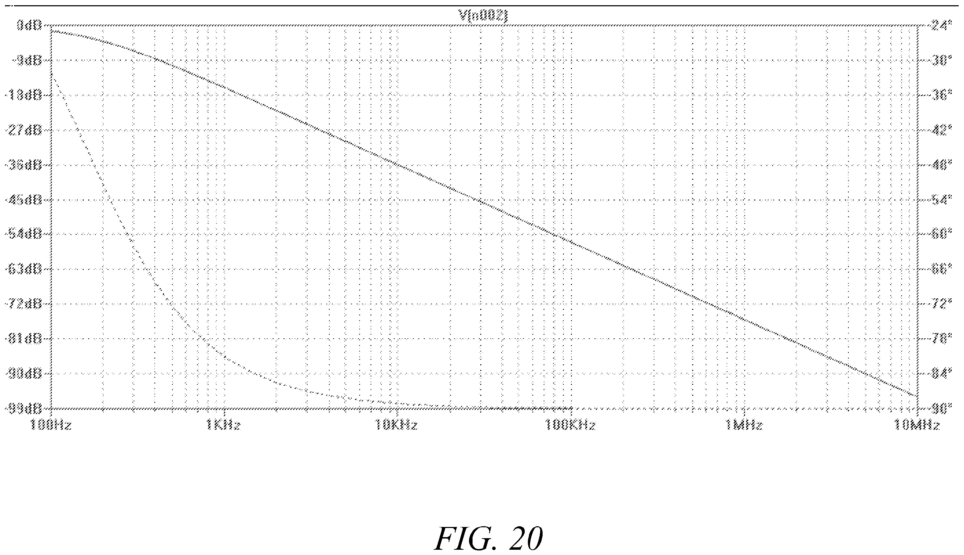

FIG. 19-20 present a simulation model of a passive capacitor solution and the attenuation obtained with a 100 k ohm source impedance. FIG. 19 is an electrical diagram illustrating a passive capacitor arrangement for a haptic device, according to some example embodiments. FIG. 20 is a graph illustrating attenuation of the passive capacitor arrangement for such a haptic device, according to some example embodiments.

According to various example embodiments, a system (e.g., a haptic device) may be configured to use the difference in operating frequency bands between the haptic stimulus and input device scanning to adjust the impedance levels (e.g., adequately). In some example embodiments, this means using one passive bypass capacitor. Other example embodiments use the active feedback to modify the grounding impedance in a desired way. Moreover, the circuit may function non-linearly in respect to the amplitude in order to reduce (e.g., further reduce) the loading on the voltage generator.

Furthermore, although the impedance adjustment circuit may be described as an add-on circuit in parallel with the isolator, it may also be seen as an integral part of the voltage generator. Indeed, some example embodiments of the system may entirely bypass the isolation by using a passive capacitor. In such cases, the input device may not work without such a bypass.

Certain example embodiments of the system may use the active circuit to modify the impedance based on the frequency and amplitude. This may have the effect of significantly reducing the capacitive loading for the HV generator, which may make the design more compact and cost-effective, as well as reduce the power consumption.

Accordingly, the functioning of the passive capacitor has been discussed. There may exist a risk that the non-linear behavior of the active circuit could cause intermittent interference to the input device. In various example embodiments, these spurious errors may be filtered out by the input device.

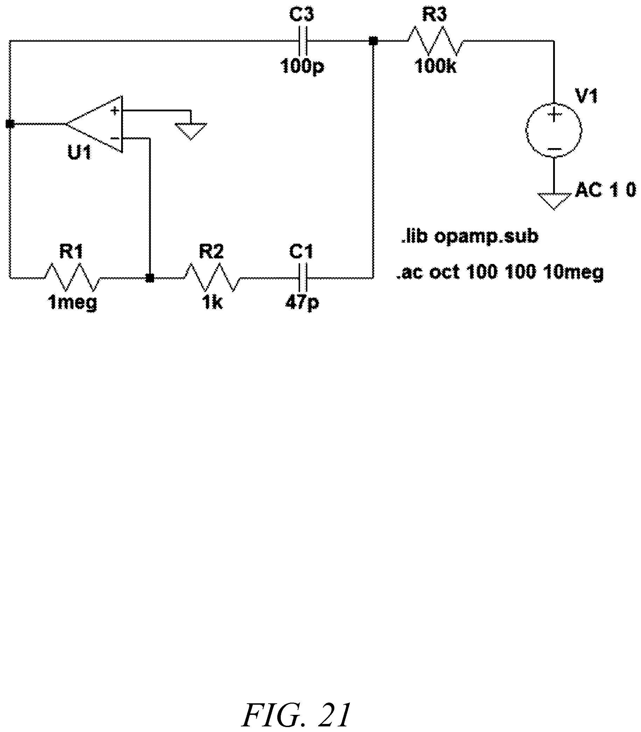

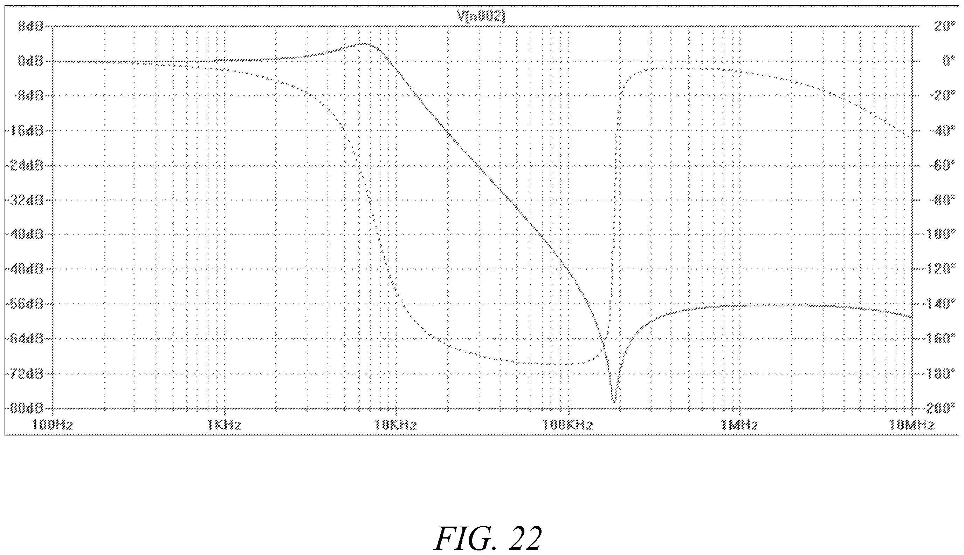

FIG. 21-22 present a simulation model for an active, simulated capacitance circuit. FIG. 21 is an electrical diagram illustrating an active capacitor arrangement for a haptic device, according to some example embodiments. At 100 kHz, the circuit may provide the same attenuation as a 10 nF capacitor. However, the loading effect below 1 kHz may be negligible in certain example embodiments. FIG. 22 is a graph illustrating attenuation of the active capacitor arrangement for such a haptic device, according to some example embodiments.

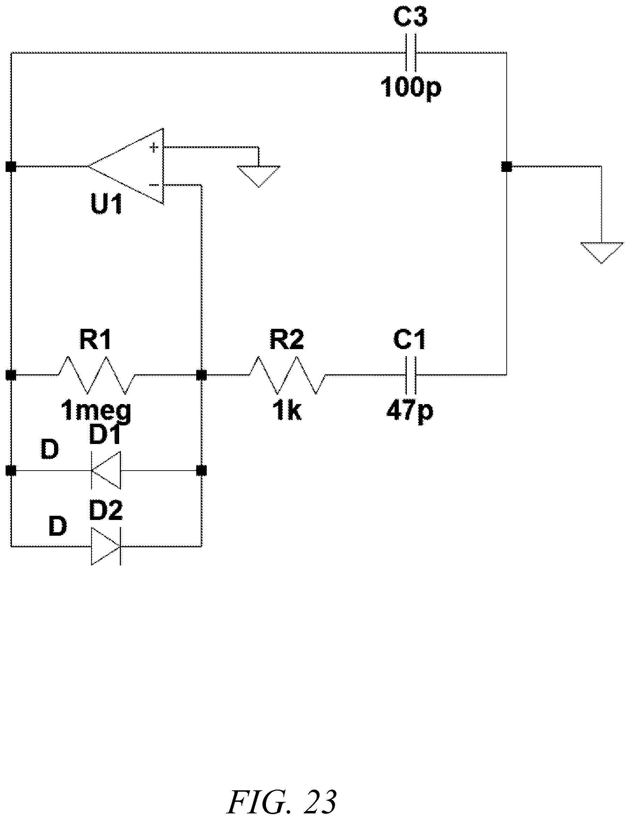

FIG. 23 shows an example embodiment of a system (e.g., a haptic device) in which diodes are used to keep the amplifier component within a linear range during sharp high-voltage (HV) edges.

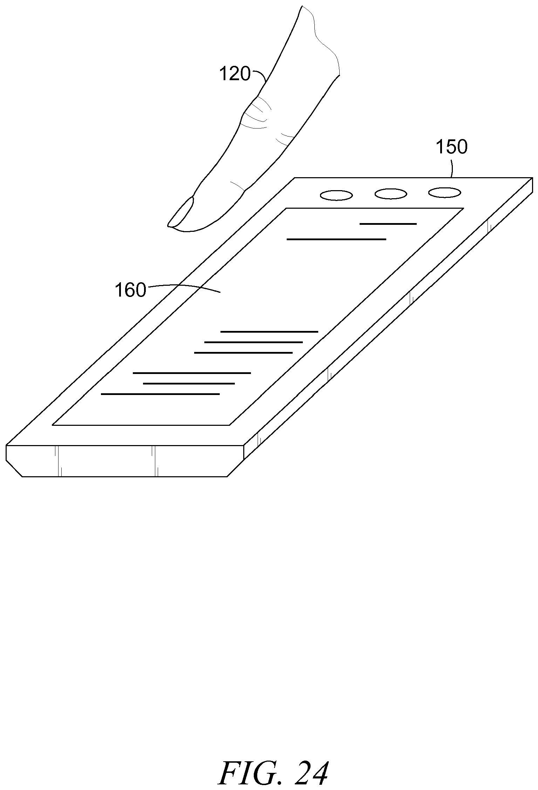

FIG. 24 is a diagram depicting a haptic device in the example form of a tactile stimulation apparatus 150, according to some example embodiments. As used herein, "tactile" means relating to a sensation of touch or pressure, and the tactile stimulation apparatus 150 may be capable of creating a sensation of touch or pressure to a body member 120 (e.g., a finger, hand, or a toe) based on the creation of a pulsating Coulomb force, as discussed by way of examples herein. The haptic device shown in FIG. 24 may be configured (e.g., with hardware, software, or both) to implement any one or more of the features and methodologies described herein.

The tactile stimulation apparatus 150 may be in the form of a tactile display device that is capable of displaying graphics as well as creating a sensation of touch to the body member 120. FIG. 24 depicts an example of such a tactile display device in the form of a smart phone having a touch screen panel 160 (e.g., a touch-sensitive screen) that is responsive to touches by the body member 120. That is, touching different portions of the touch screen panel 160 with the body member 120 may cause the smart phone to take various actions.

In addition to displaying graphics, the touch screen panel 160 may create a sensation of touch or pressure to the body member 120. The creation of the touch sensation to the body member 120 may involve the generation of one or more high voltages, which may possibly result in an electrical shock to the body member 120. To possibly prevent or suppress such an electrical shock, a region of the touch screen panel 160 may comprise a semiconducting material that may limit a flow of current to the body member 120. Additionally, the semiconducting material may also be used to reduce the thickness of the touch screen panel 160, as described by way of examples herein. In addition to the smart phone depicted in FIG. 24, the tactile stimulation apparatus 150 may include a variety of other apparatus, such as a computer monitor, a television, a door handle, a touchpad, a mouse, a keyboard, a switch, a trackball, a joystick, or any suitable combination thereof.

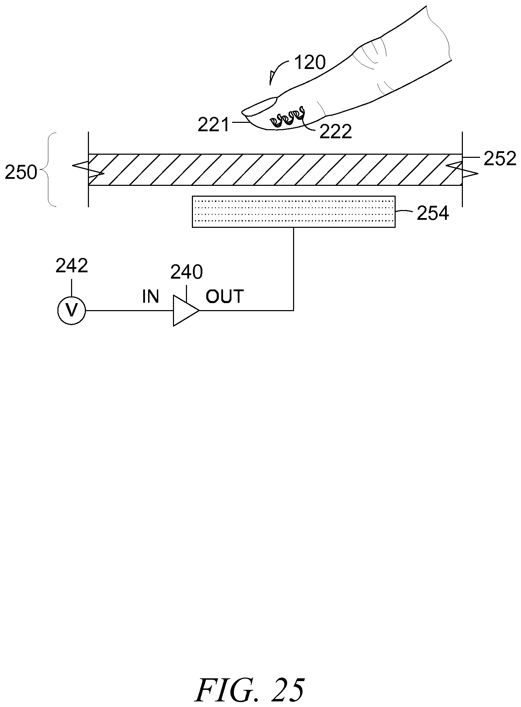

FIG. 25-28 are diagrams of various composite section structures and components that may be included in a tactile stimulation apparatus (e.g., tactile stimulation apparatus 150), according to various example embodiments. As depicted in FIG. 25, an example of a tactile stimulation apparatus may include a composite section 250 and a voltage source 242 connected to the composite section 250 by way of a voltage amplifier 240. A "composite section," as used herein, refers to a distinct part or a number of parts that comprise a tactile stimulation apparatus. As depicted in FIG. 25-28, the composite section 250 may be an outer area of a tactile stimulation apparatus that is configured to be touched by the body member 120. Here, this example of the composite section 250 has a thickness and, in various example embodiments, the composite section 250 includes an insulation region 252, which is touchable by the body member 120, and the composite section 250 may include a semiconducting region 254.

The insulation region 252 is an area, section, or portion of the composite section 250 that comprises (e.g., includes or contains) one or more insulation materials. An insulator is a material that does not conduct electricity or is a material having such low conductivity that the flow of electricity through the material is negligible. Examples of insulation materials include glass, polyethylene, wood, rubber-like polymers, polyvinyl chloride, silicone, Teflon, ceramics, and other insulation materials.

The semiconducting region 254 is an area, section, or portion of the composite section 250 that comprises one or more semiconducting materials. A semiconductor is a material that has an electrical conductivity between that of a conductor and an insulator. Accordingly, a semiconducting region 254 is a region that is neither a perfect conductor nor a perfect isolator. The electrical conductivity of the semiconducting region 254 may be generally in the range $10^3$ Siemens/cm to $10^{-8}$ S/cm. However, rather than defining the limits of resistance of the semiconducting region 254, it can be useful to present dimensioning guidelines. In one embodiment, the surface resistance of the semiconducting region 254 may be such that the semiconducting region 254 can be charged in a reasonable time to a sufficient voltage for creating an electrosensory sensation (e.g., a sensation of apparent vibration) to the body member 120. In some applications, such a reasonable charging time is less than 500 milliseconds, where, in one example, the charging time varies between 0.1 and 500 milliseconds. It should be appreciated that charging times that are less than 200 milliseconds may provide quick feedback to the user. The surface resistance of the semiconducting region 254 may be a function of its surface area. The larger the surface, the smaller the surface resistance may be, if the charging time is to be kept reasonable. Examples of semiconducting materials include semiconductive transparent polymers, zinc oxides, carbon nanotubes, indium tin oxide (ITO), silicon, germanium, gallium arsenide, silicon carbide, and other semiconducting materials.

Referring to the example embodiment shown in FIG. 25, the output "OUT" of the voltage amplifier 240 is coupled to the semiconducting region 254, which, in this particular embodiment, functions as an electrode. The insulation region 252 insulates the semiconducting region 254 against galvanic contact by the body member 120. In general, the voltage source 242 is a device that produces an electromotive force and, in this embodiment, is configured to charge the semiconducting region 254 to an electric potential, which is a point in an electric field expressed in volts, thereby producing an electrosensory sensation on the body member 120. In particular, the insulation region 252 prevents a flow of direct current from the semiconducting region 254 to the body member 120. As a result, a capacitive coupling over the insulation region 252 may be formed between the semiconducting region 254 and the body member 120, and this capacitive coupling may produce an electrosensory sensation on the body member 120. Upon application of the charge, the capacitive coupling of the semiconducting region 254 (e.g., functioning as an electrode) and the body member 120 generates a pulsating Coulomb force. The pulsating Coulomb force may stimulate vibration-sensitive receptors, mainly those called Pacinian corpuscles 222, which reside under the outermost layer of skin in the epidermis 221 of the body member 120.

The voltage amplifier 240 is driven by a signal "IN," as generated by the voltage source 242, and this signal may result in a substantial portion of the energy content of the resulting Coulomb force to reside in a frequency range to which the Pacinian corpuscles 222 may be sensitive. For humans, this frequency range can be between 10 Hz and 1000 Hz. For example, the frequency can be between 50 Hz and 500 Hz or between 100 Hz and 300 Hz, such as about 240 Hz.

In various example embodiments, the voltage amplifier 240 and the capacitive coupling over the insulation region 252 are dimensioned such that the Pacinian corpuscles 222 or other mechanoreceptors are stimulated and an electrosensory sensation is produced. For this, the voltage amplifier 240, the voltage source 242, or any suitable combination thereof, may generate an output of several hundred volts or even several kilovolts. The alternating current driven into the body member 120 by way of capacitive coupling may have a very small magnitude which may be further reduced by using, for example, a low-frequency alternating current.

It should be appreciated that galvanic grounding sets the human potential close to ground, and creates a strong potential difference and electric field between the composite section 250 and the body member 120. Galvanic grounding may work well if the user is touching properly the conductive ground electrode. However, in examples of a very light touch, only a very small contact area is in use, and local capacitive current may produce a spark or electric shock, which may cause irritation to the body member 120. The semiconducting region 254 may limit the flow of local current thorough a small area and thus to the body member 120. As a result, the limit of the current flow may suppress or prevent electrical shocks to the body member 120, thereby possibly reducing irritation to the body member 120.

Additionally, the semiconducting region 254 may be used to reduce a thickness of the insulation region 252. In particular, a high current density electron channel may be formed when there is an electric breakdown, which is a rapid reduction in the resistance of an insulator that can lead to a spark jumping around or through the insulator (e.g., insulation region 252). However, in some situations, electron channels may be difficult to form in certain semiconducting materials because such materials may have lower charge carrier density. Hence, electric breakdown may be unlikely to occur with the use of semiconducting materials even with the application of a high electric field. As a result, the insulation region 252 may also be decreased, thereby resulting in reduced thickness of the insulation region 252. It should be appreciated that near the lower limit of this voltage range (e.g., several hundred volts to several kilovolts), the insulator thickness may be as thin as one atom layer or, in other examples, may be between about 0.01mm and about 1 mm, between about 1 $\mu$m and about 2 mm, greater than about 2 mm, between about 20 $\mu$m and about 50 $\mu$m, or less than about 20 $\mu$m. As used herein, the term "about" means that the specified dimension or parameter may be varied within an acceptable manufacturing tolerance for a given application. In some embodiments, the acceptable manufacturing tolerance is ±10%. As material technology and nanotechnology develop, even thinner durable insulating sections may become available, and this may also permit a reduction of the voltages used.

It should also be appreciated that the voltage source 242 does not need to be physically coupled to the semiconducting region 254 to be able to charge the semiconducting region 254 to an electric potential. In certain example embodiments, the voltage source 242 may be proximate to the semiconducting region 254, but not physically connected. In particular, the electric field generated by the voltage source 242 may charge the semiconducting region 254 to an electric potential without the voltage source 242 being physically connected to the semiconducting region 254. This capacitive transfer of energy may also be a type of capacitive coupling and referred to as a capacitive connection.

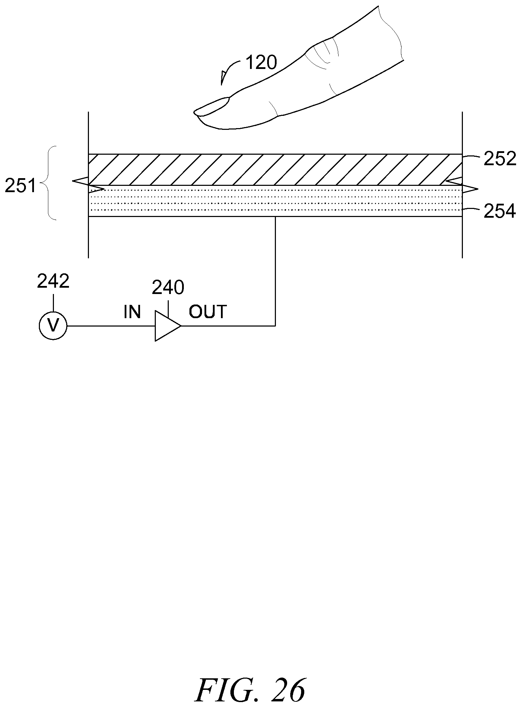

The semiconducting region 254 depicted in FIG. 25 is proximate to the insulation region 252, but it should be appreciated that the composite section 250 may also have a variety of other different structures. FIG. 26 depicts a diagram of a different composite section structure, consistent with an alternative embodiment. This composite section 251 also comprises an insulation region 252 and a semiconducting region 254. Similarly, the voltage source 242 is connected to the composite section 251 by way of a voltage amplifier 240. The insulation region 252 is touchable by the body member 120 and the semiconducting region 254 is disposed below the insulation region 252.

The insulation region 252 comprises a piece of insulation material, such as a sheet of glass. The semiconducting region 254 comprises a different piece of semiconducting material, such as a sheet of a semiconductive transparent polymer. The piece of insulation material that forms the insulation region 252 is physically distinct from the piece of semiconducting material that forms the semiconducting region 254. The composite section 251 is formed from adhering the piece of insulation material together with the piece of semiconducting material.

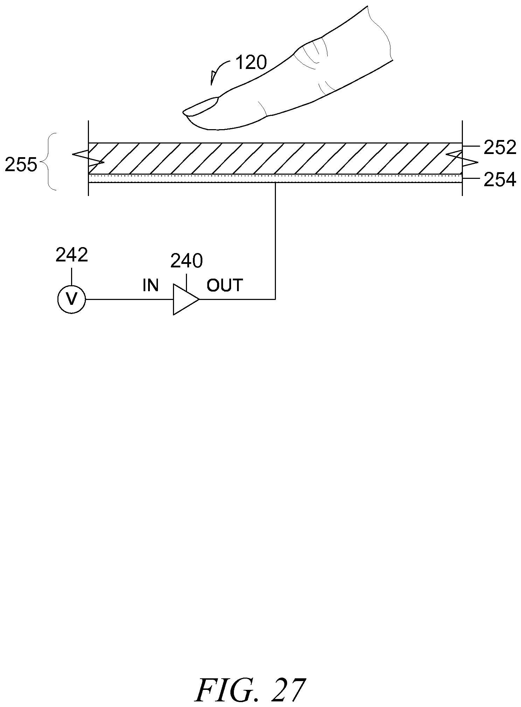

FIG. 27 depicts a diagram of another composite section structure, in accordance with yet another example embodiment. This composite section 255 also comprises an insulation region 252 and a semiconducting region 254. Similarly, the voltage source 242 is connected to the composite section 255 by way of a voltage amplifier 240. The insulation region 252 is touchable by the body member 120 and the semiconducting region 254 is disposed below the insulation region 252.

The insulation region 252 has a side or surface that is touchable by the body member 120 and an opposite side or surface. In this embodiment, a layer of a semiconducting material is spread over this opposite surface of the insulation region 252. This layer of semiconducting material forms the semiconducting region 254. It should be appreciated that the layer of the semiconducting material may be a thin layer. For example, in one embodiment, the layer may be as thin as one atom layer. In other example embodiments, thicknesses of the semiconducting region 254 may be between about 1 $\mu$m and about 200 $\mu$m, greater than about 200 $\mu$m, or between about 20 $\mu$m to 50 $\mu$m.

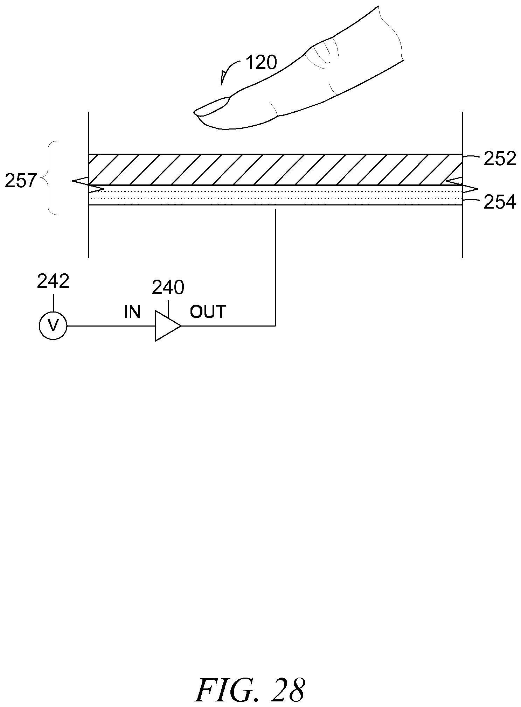

FIG. 28 depicts a diagram of yet another composite section structure, in accordance with another example embodiment. This composite section 257 also comprises an insulation region 252 and a semiconducting region 254. Similarly, the voltage source 242 is connected to the composite section 257 by way of a voltage amplifier 240. The insulation region 252 is touchable by the body member 120 and the semiconducting region 254 is disposed below the insulation region 252.

However, in this embodiment, the composite section 257 is not formed from two separate pieces of materials. Rather, the insulation region 252 and the semiconducting region 254 initially comprise a single piece of insulation material, and a dopant may be added to a portion of the insulation material to change the material property of the portion to a semiconducting material. Particularly, the addition of the dopant increases the conductivity of the portion of the insulation material to change its material property to that of a semiconducting material. Doping may be by way of oxidation (e.g., p-type doping) or by way of reduction (e.g., n-type doping). This doped portion forms the semiconducting region 254. Examples of such dopants include conductive polymers, which are generally classified as polymers with surface resistivity from $10^1$ to $10^7$ ohms/square. Polyaniline (PANI) is an example of a conductive polymer. Other examples of dopants that may be used include carbon nanotubes, conductive carbons, carbon fibers, stainless steel fibers, gallium arsenide, sodium naphthalide, bromine, iodine, arsenic pentachloride, iron (III) chloride, and nitrosyl ($NOPF_6$).

Vice versa, in an alternate embodiment, the composite section 257 may initially comprise a single piece of semiconducting material, and a dopant may be added to a portion of the semiconducting material to change the portion to an insulation material. In other words, the insulation region 252 and the semiconducting region 254 initially comprise a single piece of semiconducting material, and a dopant may be added to a portion of the semiconducting material to change the material property of the portion to an insulation material. The addition of the dopant decreases the conductivity of the portion of the semiconducting material to change its material property to that of an insulation material. This doped portion forms the insulation region 252.

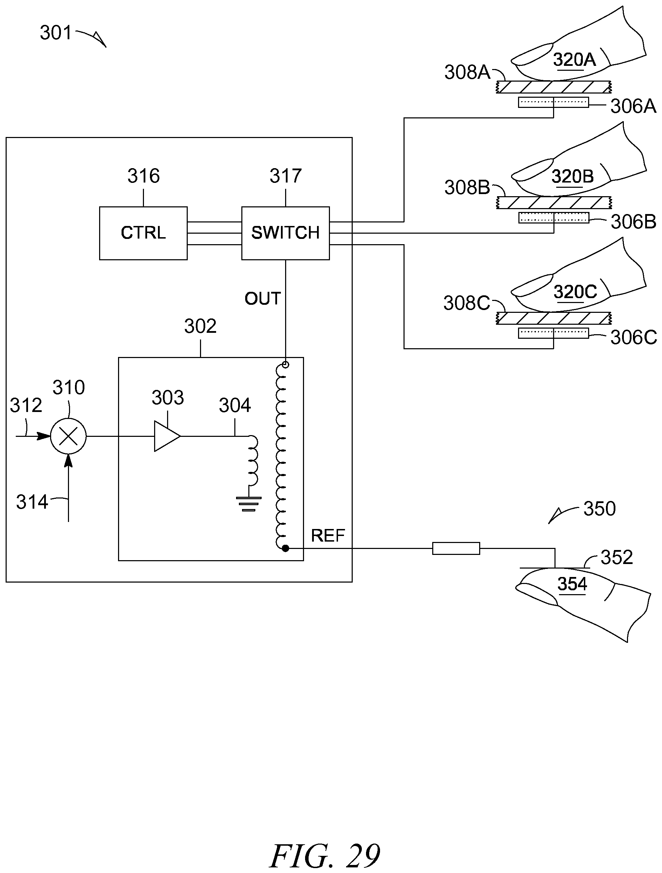

FIG. 29 is a circuit diagram, which implements an illustrative example embodiment of a tactile stimulation apparatus 301 (e.g., as an example of a haptic device). In this embodiment, the voltage amplifier 302 is implemented as a current amplifier 303 followed by a voltage transformer 304. The secondary winding of the voltage transformer 304 is in, for example, a flying configuration with respect to the remainder of the tactile stimulation apparatus 301. The amplifiers 302 and 303 are driven with a modulated signal whose components as inputted in a modulator 310 are denoted by 312 and 314. The output of the voltage amplifier 302 is coupled to a switch array 317, which in turn is coupled to a controller 316 and electrodes 306A, 306B, and 306C that comprise a semiconductor material. The electrodes 306A, 306B, and 306C are insulated against galvanic contact by insulation regions 308A, 308B, and 308C. The embodiment described in connection with FIG. 29 involves multiple electrodes 306A, 306B, and 306C, but each electrode alone 306A, 306B, or 306C stimulates a distinct area of skin of body member 320A, 320B, or 320C, or more precisely, the mechanoreceptors, including the Pacinian corpuscles underlying the outermost layers of skin. Therefore, a configuration of *n* electrodes 306A, 306B, and 306C may convey *n* bits of information in parallel.

Although not strictly necessary, it may be possibly beneficial to provide a grounding connection which helps to bring a user closer to a well-defined (e.g., non-floating) potential with respect to the voltage section of the tactile stimulation apparatus 301. In an embodiment, a grounding connection 350 connects a reference point REF of the voltage section to a body member 354, which is different from the body members 320A, 320B, and 320C to be stimulated. The reference point REF is at one end of the secondary winding of the transformer 304, while the drive voltage for the electrodes 306A, 306B, and 306C is obtained from the opposite end of the secondary winding. In an illustrative embodiment, the tactile stimulation apparatus 301 is a hand-held apparatus, which comprises a touch screen panel activated by one or more of the body members 320A, 320B, and 320C. The grounding connection 350 terminates at a grounding electrode 352, which may form a surface of the tactile stimulation apparatus 301.

The grounding connection 350 between the reference point REF and the non-stimulated body member 354 may be electrically complex. In addition, hand-held apparatus typically lack a solid reference potential with respect to the surroundings. Accordingly, the term "grounding connection" does not require a connection to a solid-earth ground. Instead, a grounding connection means any suitable connection which helps to decrease the potential difference between the reference potential of the tactile stimulation apparatus 301 and a second body member (e.g., body member 354) distinct from the one or more body members to be stimulated (e.g., body members 320A, 320B, and 320C). The non-capacitive coupling 350 (e.g., galvanic coupling) between the reference point REF of the voltage section and the non-stimulated body member 354 may enhance the electrosensory sensation experienced by the stimulated body members 320A, 320B, and 320C. Conversely, an equivalent electrosensory stimulus can be achieved with a lower voltage, over a thicker insulator with use of grounding connection 350, or any suitable combination thereof.

As discussed above, the amplifiers 302 and 303 may be driven with a high-frequency signal 312, which may be modulated by a low-frequency signal 314 in the modulator 310. The frequency of the low-frequency signal 314 may be such that the Pacinian corpuscles are responsive to that frequency. According to various example embodiments, the frequency of the high-frequency signal 312 may be slightly above the hearing ability of humans, such as between 18 kHz and 25 kHz, or between 19 kHz and 22 kHz.

The embodiment described in FIG. 29 may produce a steady state electrosensory sensation as long as one or more of the body members 320A, 320B, and 320C is in the vicinity of one or more of the electrodes 306A, 306B, and 306C, respectively. In order to convey useful information, the electrosensory sensation may be modulated. Such information-carrying modulation can be provided by electronically controlling one or more operating parameters. For example, such information carrying modulation can be provided by controller 316, which controls one or more of the operating parameters. For instance, the controller 316 may enable, disable, or alter the frequency or amplitude of the high-frequency signal 312, the frequency or amplitude of the low-frequency signal 314, the gain of the amplifier 302, or any suitable combination thereof. As another example, the controller 316 may controllably enable or disable the voltage source (not shown separately) or controllably break the circuit at any suitable point.

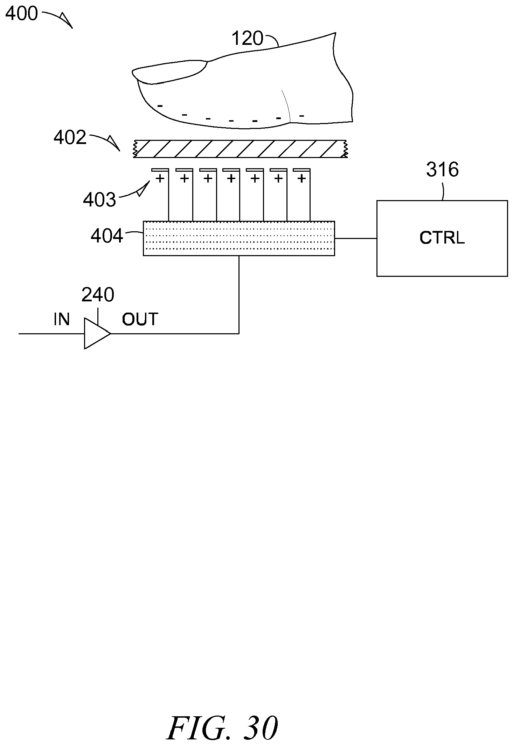

FIG. 30 is a circuit diagram depicting an example embodiment of a tactile stimulation apparatus 400 in which a strength of the capacitive coupling is adjusted by electrode movement. The composite section of the tactile stimulation apparatus 400 includes a set of electrodes 404 comprising a semiconducting material and an insulation region 402 disposed above the set of electrodes 404. This set of electrodes 404 forms a semiconducting region of the composite section and is coupled to a controller 316 and a voltage amplifier 240. Generation of an electric field, and its variation, is effected by way of the set of electrodes 404, which comprises individual electrodes 403. The individual electrodes 403 may be separated by insulator elements, so as to prevent sparking or shorting between the electrodes 403.

In this embodiment, the individual electrodes 403 are individually controllable, wherein the controlling of one of the electrodes 403 affects its orientation and/or protrusion. The set of electrodes 404 is oriented, by way of the output signal from the controller 316, such that the set of electrodes 404 collectively form a plane under the insulation region 402. In this example, the voltage current (e.g., DC or AC) from the voltage amplifier 240 to the set of electrodes 404 generates an opposite-signed charge (e.g., a negative charge) of sufficient strength to the body member 120 in close proximity to the composite section. A capacitive coupling between the body member 120 and the tactile stimulation apparatus 400 is formed over the insulation region 402, which may produce an electrosensory sensation on the body member 120.

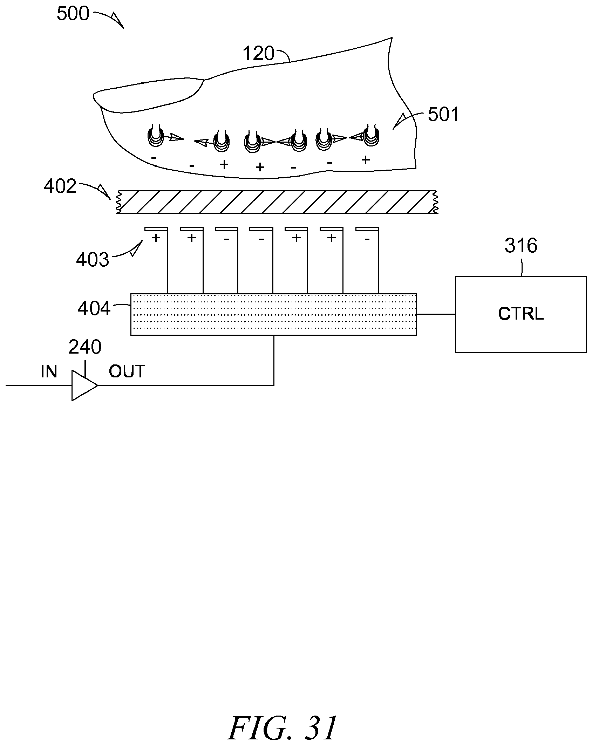

FIG. 31 is a circuit diagram depicting an example embodiment of a tactile stimulation apparatus 500 in which individual electrodes 403 in the set of electrodes 404 may have opposite charges. The composite section of the tactile stimulation apparatus 500 includes a set of electrodes 404 comprising a semiconducting material and an insulation region 402 disposed above the set of electrodes 404. This set of electrodes 404 forms a semiconducting region of the composite section and is coupled to a controller 316 and a voltage amplifier 240.

The charges of individual electrodes 403 may be adjusted and controlled by way of the controller 316. The capacitive coupling between the tactile stimulation apparatus 500 and the body member 120 may give rise to areas having charges with opposite signs 501 (e.g., positive and negative charges). Such opposing charges are mutually attractive to one another. Hence, it is possible that Coulomb forces stimulating the Pacinian corpuscles may be generated not only between the tactile stimulation apparatus 500 and the body member 120, but also between infinitesimal areas within the body member 120 itself.

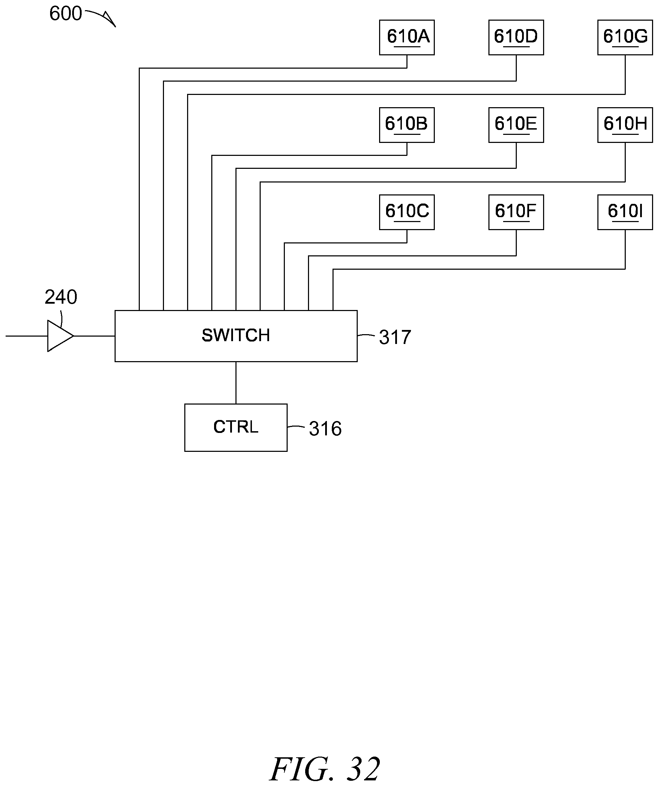

FIG. 32 is a circuit diagram depicting another example embodiment of a tactile stimulation apparatus 600 having a group of individually controllable electrodes 610a-610i. The individually controllable electrodes 610a-610i comprise a semiconducting material and, as depicted in FIG. 32, they are organized in the form of a matrix and are coupled to a switch array 317, which in turn is coupled to a controller 316 and a voltage amplifier 240. Such a matrix can be integrated into a tactile display device. For example, the electrodes 610a-610i can be positioned behind a touch screen panel, wherein "behind" means the side of the touch screen panel opposite to the side facing the user during normal operation. The electrodes 610a-610i can be very thin and/or transparent, whereby the electrodes 610a-610i can overlay the touch screen panel on the side facing the user.

The electric charges, which are conducted from the voltage amplifier 240 to the electrodes 610a-610i by way of the switch array 317, may all have similar signs or may have different signs, as illustrated above in FIG. 31. For instance, the controller 316, as depicted in FIG. 32, may control the switches in the switch array 317 individually, or certain groups may form commonly controllable groups. The surface of an individual electrode 610a-610i and/or its associated insulator can be specified according to the intended range of operations or applications. For example, a minimum area may be about 0.01 cm2, while a maximum area may be roughly equal to the size of a human hand.

The matrix of electrodes 610a-610i and the switch array 317 may provide a spatial variation of the electrosensory sensations. That is, the electrosensory sensation provided to the user may depend on the location of the user's body member (e.g., a finger) proximate to the tactile stimulation apparatus 600 having a touch screen panel with the electrodes 610a-610i. The spatially varying electrosensory sensation may, for example, provide the user with an indication of the layout of the touch-sensitive areas of the touch screen panel. Accordingly, the tactile stimulation apparatus 600 depicted in FIG. 32 may be configured to produce a large number of different touch-sensitive areas, each with a distinct "feel" or a different pattern for the temporal and spatial variation of the electrosensory sensation.

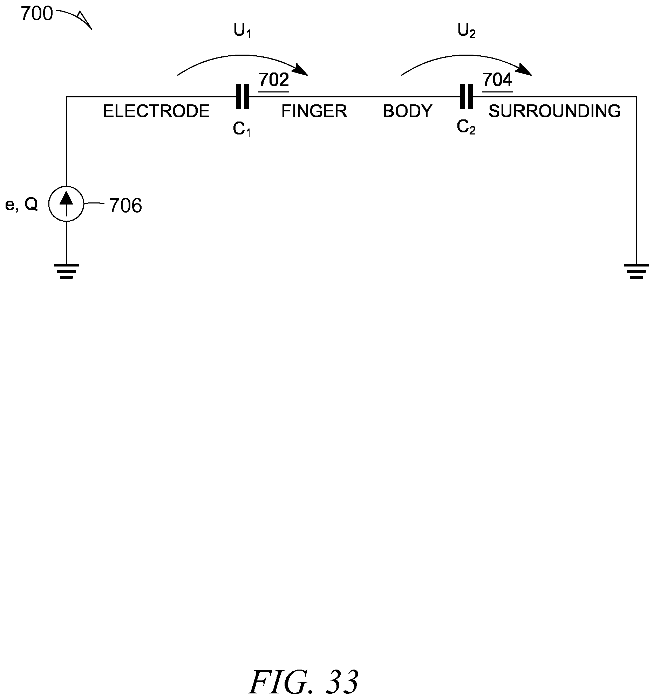

FIG. 33 is a circuit diagram depicting a distribution of an electric field-generating potential in capacitive couplings when a tactile stimulation apparatus 700 is grounded, in accordance with an example embodiment. As depicted, two capacitors 702 and 704 and a voltage source 706 are coupled in series. In general, the drive voltage e of an electrode is divided based on the ratio of capacitances C1 and C2, wherein C1 is the capacitance between a body member (e.g., a finger) and the electrode, and C2 is the stray capacitance of the user. The electric field experienced by a body member is:

$$U1 = \frac{e * C2}{C1 + C2}$$

This voltage U1 is lower than the drive voltage e from the voltage source 706. The reference potential of the tactile stimulation apparatus 700 may be floating, as will be described in more detail by way of example below, which may further decrease the electric field directed to the body member. Some embodiments aim at keeping the capacitance C1 low in comparison to that of C2. Here, at least capacitance C1 is not significantly higher than C2. Other embodiments aim at adjusting or controlling C2, for instance by coupling the reference potential of the tactile stimulation apparatus 700 back to the user.

Stray capacitances can be controlled by arrangements in which several electrodes are used to generate potential differences among different areas of a composite section. By way of example, this technique may be implemented by arranging a side of a touch screen panel of a hand-held device (e.g., the top side of the device) to a first electric potential, while the opposite side is arranged to a second electric potential, wherein the two different electric potentials can be the positive and negative poles of the hand-held device. Alternatively, a first surface area can be the electric ground (e.g., reference electric potential), while a second surface area is charged to a high electric potential. Moreover, within the constraints imposed by one or more insulator layers, it is possible to form minuscule areas of different electric potentials, such as electric potentials with opposite signs or widely different magnitudes. Furthermore, such areas may be small enough that a body member is simultaneously subjected to the electric fields from several areas of a surface with different potentials.

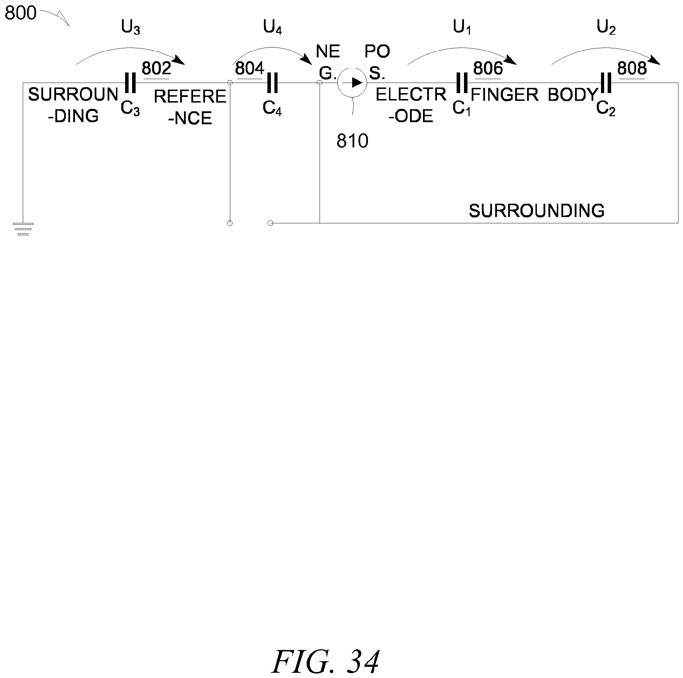

FIG. 34 is a circuit diagram depicting another example embodiment of a tactile stimulation apparatus 800 having a floating voltage source. As depicted, the tactile stimulation apparatus 800 includes capacitors 802, 804, 806, and 808 coupled to a floating voltage source 810. This floating voltage source 810 may be implemented, for example, by way of inductive or capacitive coupling, with break-before-make switches, or any suitable combination thereof. A secondary winding of a transformer is an example of a floating voltage source.

By measuring the voltage U4, it is possible to detect a change in the value of capacitance C1, the value of capacitance C2, or both. Assuming that the floating voltage source 810 is a secondary winding of a transformer, the change in one or more of the capacitances C1 and C2 may be detected on the primary side as well, for example, as a change in load impedance. Such a change in one or more of the capacitances C1 and C2 may serve as an indication of a touching or approaching body member. In some example embodiments, the tactile stimulation apparatus 800 is arranged to utilize this indication of the touching or approaching body member such that the tactile stimulation apparatus 800 uses a first (e.g., lower) voltage to detect the touching or approaching by the body member and a second (e.g., higher) voltage to provide feedback to the user. For example, such a detection of the touching by the body member using the lower voltage may trigger automatic unlocking of the tactile stimulation apparatus 800 or may activate illumination of a touch screen panel. The feedback using the higher voltage may indicate any one or more of the following: the outline of each touch-sensitive area; a detection of the touching or approaching body member by the tactile stimulation apparatus 800; the significance of (e.g., the act to be initiated by) the touch-sensitive area; or other information processed by the application program and that may be potentially useful to the user.

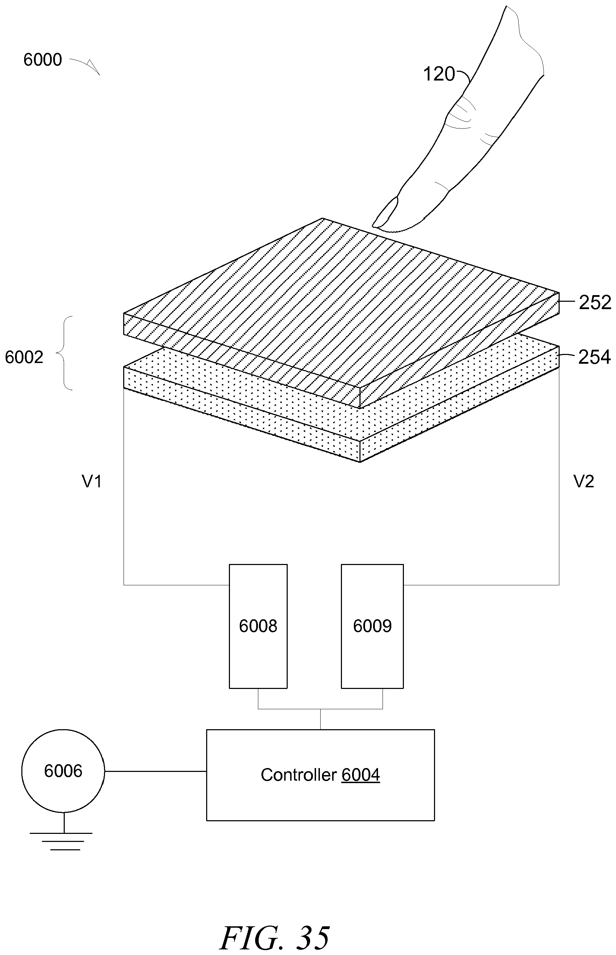

FIG. 35 is a circuit diagram illustrating another example embodiment of a tactile stimulation apparatus 6000. In this embodiment, the tactile stimulation apparatus 6000 includes a composite section 6002 connected to two different voltage sources 6008 and 6009, which are connected to a power source 6006 by way of a controller 6004. In the example embodiment shown, the composite section 6002 comprises an insulation region 252, which is touchable by the body member 120, and a semiconducting region 254 proximate to the insulation region 252. The semiconducting region 254 may be charged to a sufficient voltage for creating an electrosensory sensation to the body member 120. However, in this embodiment, the semiconducting region 254 may be charged from at least two different points. As depicted in FIG. 35, the voltage source 6008 is connected to the semiconducting region 254 at one point, while the voltage source 6009 is connected to the semiconducting region 254 at a different point.

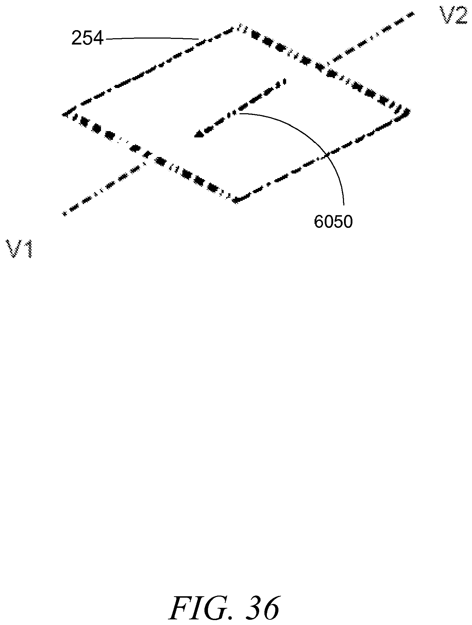

The controller 6004 may individually drive one or more of the voltage sources 6008 and 6009. For example, the controller 6004 can drive the voltage source 6008 to generate a voltage VI at a different time phase from voltage V2, which may be generated by voltage source 6009. In another example, the controller 6004 may also drive the voltage source 6008 to generate VI at a different potential from voltage V2. The difference in potential between V1 and V2 may create a spatial wave on a surface of the semiconducting region 254. For example, FIG. 36 illustrates a surface of the semiconducting region 254. The edges of the semiconducting region 254 are connected to two different voltage sources that generate two different voltages VI and V2. In this example, the voltage V2 is at a higher potential than voltage VI, thereby creating a spatial wave along direction 6050 on the surface of the semiconducting region 254. This spatial wave created by different potentials V1 and V2 may possibly enhance the electrosensory sensation experienced by the stimulated body member 120 depicted in FIG. 35.

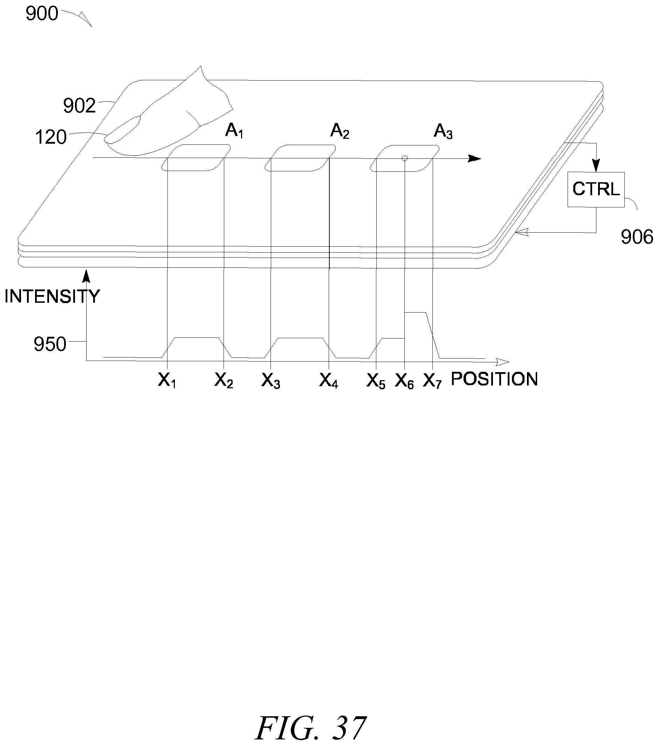

FIG. 37 is a schematic diagram depicting an example embodiment of a tactile display device 900 having a single electrode that produces electrosensory sensations based on a location of a body member 120. Here, the tactile display device 900 includes a touch screen panel 902, which may be a touch-sensitive screen, and for purposes of describing the present embodiment, may include three touch-sensitive areas A1, A2 and A3. The controller 906 detects the approaching or touching of the touch-sensitive areas A1, A2 and A3 by the body member 120.

The touch screen panel 902 may include various regions of materials, such as one or more insulation regions, a conductive region, and a semiconducting region. The layout of the regions is described in more detail by way of example elsewhere herein, but the various regions may form two different electrodes. One electrode (e.g., a "touch detection electrode") may be dedicated to detect touch by the body member 120 while another electrode (e.g., a "electrosensory sensation electrode") may be dedicated to produce an electrosensory sensation on the body member 120. In some example embodiments, to detect touch, an application of voltage to the touch detection electrode generates an electrostatic field. A touching by the body member 120 changes this electrostatic field, and the location of the body member 120 (e.g., A1, A2, or A3) may be identified by the tactile display device 900 based on these changes.

In addition to processing touch-screen functionalities, the controller 906 may use information of the position of the body member 120 to temporally vary the intensity of the electrosensory sensation produced by the electrosensory sensation electrode on the body member 120. Although the intensity of the electrosensory sensation is varied over time, time is not an independent variable in the present embodiment. Instead, the timing of the temporal variations may be a function of the location of the body member 120 relative to the touch-sensitive areas (e.g., A1, A2 and A3). Accordingly, the tactile display device 900 depicted in FIG. 37 may be operable to cause variations in the intensity of the electrosensory sensation produced by the electrosensory sensation electrode on the body member 120, and the variations may be based on the location of the body member 120 relative to the touch-sensitive areas of the touch screen panel 902. In other words, the intensity of the electrosensory sensation may be varied based on the location of the body member 120.

The graph 950 depicted below the touch screen panel 902 illustrates this functionality. As shown in FIG. 37, the three touch-sensitive areas A1, A2 and A3 are demarcated by respective x coordinate pairs {x1, x2}, {x3, x4} and {x5, x7}. The controller 906 does not sense the presence of the body member 120 as inactive, as long as the body member 120 is to the left of any of the touch-sensitive areas A1, A2, and A3. In this example, the controller 906 responds by applying a low-intensity signal to the electrosensory sensation electrode. As soon as the body member 120 crosses the x coordinate value x1, the controller 906 detects the body member 120 over the first touch-sensitive area A1 and starts to apply a medium-intensity signal to the electrosensory sensation electrode. Between the areas A1 and A2 (e.g., between x coordinates x2 and x3), the controller 906 again applies a low-intensity signal to the electrosensory sensation electrode. The second touch-sensitive area A2 may be processed similarly to the first touch-sensitive area A1, but the third touch-sensitive area A3 may be processed somewhat differently. As soon as the controller 906 detects the body member 120 above or in close proximity to the area A3, it begins to apply the medium-intensity signal to the electrosensory sensation electrode. This medium-intensity signal may similarly be applied also to areas A1 and A2. However, the user may decide to press the touch screen panel 902 at a point x6 within the third area A3. The controller 906 detects the finger press (e.g., the activation of a particular function assigned to the area A3) and responds by applying a high-intensity signal to the electrosensory sensation electrode. Thus, the embodiment of the tactile display device 900 can provide the user with a tactile feedback, which creates an illusion of a textured surface, although only a single electrosensory sensation electrode is used to create the electrosensory sensation.

To facilitate integration of a tactile stimulation apparatus with capacitive devices, such as the tactile display device 900, the region that includes the touch detection electrode or other regions may comprise a semiconducting material, which may separate the tactile stimulation regions from the touch sensitive regions. At the voltage and current levels associated with the touch sensitive regions or functionalities, the semiconducting region may function as an insulator, meaning that the semiconducting region does not hinder the operation of the capacitive device. However, at the voltage, frequency, current levels, or other spatial topologies associated with the tactile stimulation regions or associated functionalities, the semiconducting region may function as a conductor, meaning that the semiconducting region can be used as the electrode by which a current is conducted over the capacitive coupling to the body member 120, as discussed above.

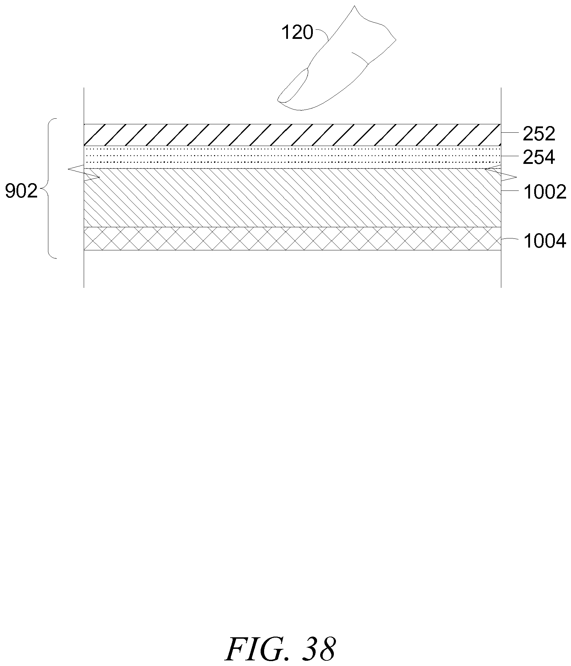

FIG. 38-39 are diagrams of the various regions of materials that may comprise different example embodiments of a touch screen panel. As depicted in FIG. 38, an embodiment of the touch screen panel 902 includes a conductive region 1004, an insulation region 1002 disposed above the conductive region 1004, a semiconducting region 254 disposed above the insulation region 1002, and another insulation region 252 disposed above the semiconducting region 254.

In this embodiment, the insulation region 1002 and the conductive region 1004 may comprise a conventional touch screen panel. The conductive region 1004 forms an electrode (e.g., the "touch electrode" as discussed above) that functions to detect touch of the body member 120, and is different from the electrode described above that produces an electrosensory sensation on the body member 120. This conductive region 1004 may comprise metallic or transparent conductive material. Depending on the conductivity, in one example, a thickness of the conductive region 1004 may be between about 1 μm and about 200 μm. In other examples, a thickness of the conductive region 1004 may be less than about 1 μm or greater than about 200 μm.

The insulation region 1002 disposed above the conductive region 1004 may comprise a transparent insulation material, such as glass. In one example, a thickness of the insulation region 1002 may be between about 10 μm and about 2 mm. In another example, a thickness of the insulation region 1002 may be greater than about 2 mm. In yet another example, a thickness of the insulation region 1002 may be between about 0.4 mm and 0.7mm.

To suppress electrical shocks to the body member 120 or for other functionalities, the semiconducting region 254 may be included in the touch screen panel 902. This semiconducting region 254 also forms an electrode (e.g., the "electrosensory sensation electrode" as discussed above) that functions to produce an electrosensory sensation. For example, as explained in more detail below, a voltage source (not shown) can charge the semiconducting region 254 to an electric potential to produce an electrosensory sensation on the body member 120. As a result, the embodiment of the touch screen panel 902 is configured to detect touch by the body member 120 as well as generating electrosensory sensation on the body member 120.

Here, the semiconducting region 254 may be disposed above the insulation region 1002 (e.g., on top of a conventional touch screen panel). Another insulation region 252 may be disposed above the semiconducting region 254. For example, a thin layer of semiconducting material, such as a semi-conductive transparent polymer, may be spread over a conventional touch screen panel, which comprises the insulation region 1002 and the conductive region 1004. Another piece of glass, which is an insulation material, may then be disposed above the layer of the semiconducting material.

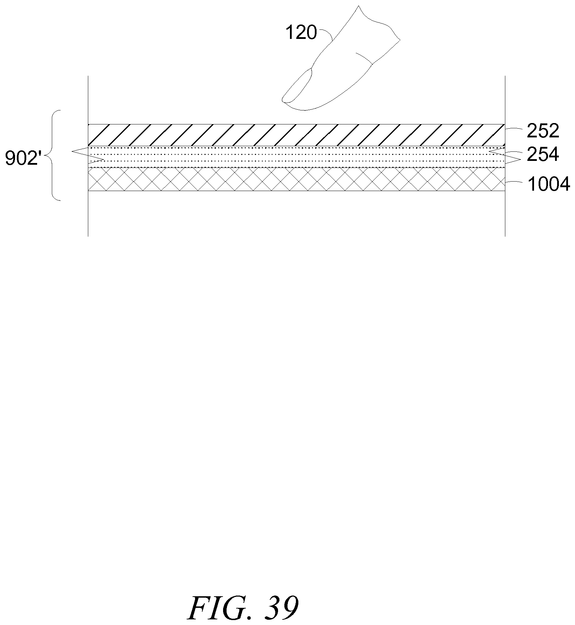

In an alternative embodiment, the insulation region 1002 may be excluded from the touch screen panel 902. As depicted in FIG. 39, this alternative embodiment of the touch screen panel 902' includes the conductive region 1004, the semiconducting region 254 disposed above the conductive region 1004, and the insulation region 252 disposed above the semiconducting region 254. Here, if the semiconducting region 254 is a sufficiently poor conductor, then the semiconducting region 254 may be disposed directly above the conductive region 1004. In one example, the semiconducting region 254 may be a sufficiently poor conductor if its surface resistivity is less than 10 ohms/square. However, it should be noted that in addition to the material property of the semiconducting region 254, the exclusion of an insulation region between the semiconducting region 254 and the conductive region 1004 may additionally depend on the capability of the touch sensitive regions (e.g., conductive region 1004) or other circuitry of a tactile display device to handle current leakage from the semiconducting region 254. Such a capability may depend on, for example, size of the conductive region 1004, size of the touch screen panel 902', grounding, and other properties.

It should be appreciated that the semiconducting region 254 depicted in FIG. 38-39, as well as the semiconducting regions and electrodes depicted in other figures herein, may be homogenous or non-homogenous. In one embodiment, a surface of the semiconducting region 254 may be non-homogenous such that, for example, the conductivity can be varied over the surface. For example, the semiconducting region 254 may comprise separately controllable isolated semiconducting areas where each area can be separately activated. Here, a greater range of electrosensory sensations may be generated by sequential or simultaneous activation of each element with voltages that vary between the different semiconducting areas. In another example, the surface of the semiconducting region 254 has a pattern, such as a structure of rows of hexagonal cells or other patterns, that may allow different electric field patterns to be produced. As a result, the geometry of the patterns may create different electrosensory sensations to the body member 120. In yet another example, a surface of the semiconducting region 254 may have surface areas with different conductivities, which allow the modification of charge flows to the various surface areas. Such a surface may, for example, be constructed using gradient doping. This surface may provide faster or slower flow of charge to the various surface areas of the semiconducting region 254. This controlled flow of charge may provide a more controlled electric field at a tactile display device and therefore, may result in better stability of the tactile display device. Additionally, this controlled flow can be used to modify the electrosensory sensations.

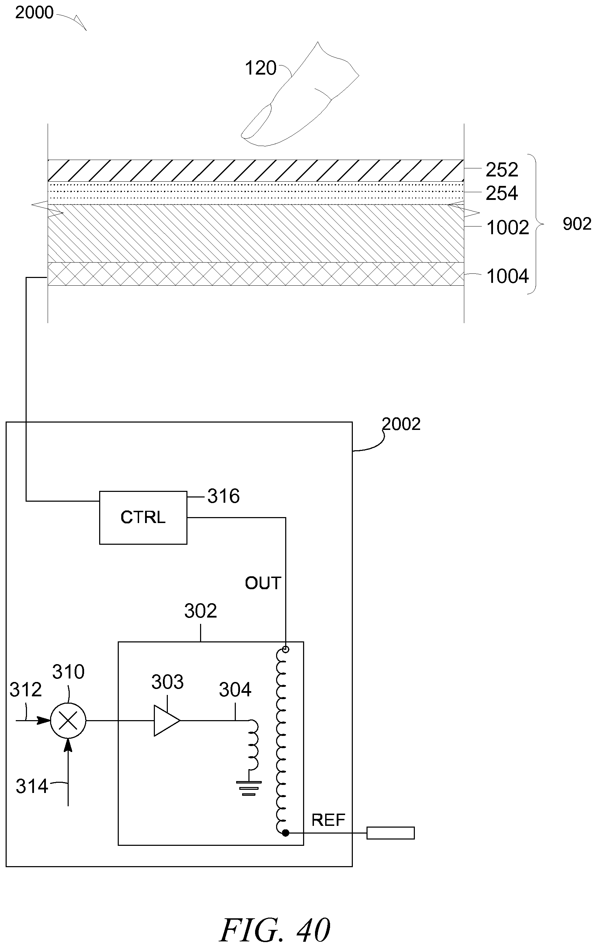

FIG. 40 is a diagram of an exemplary embodiment of circuitry configured to charge the touch screen panel 902' depicted in FIG. 39. As depicted in FIG. 40, a tactile display device 2000 includes circuitry 2002 and the touch screen panel 902 described in FIG. 38. As described above, the touch screen panel 902 includes a conductive region 1004, an insulation region 1002 disposed above the conductive region 1004, a semiconducting region 254 disposed above the insulation region 1002, and another insulation region 252 disposed above the semiconducting region 254.

The circuitry 2002, in this embodiment, includes a voltage amplifier 302, which is implemented as a current amplifier 303 followed by a voltage transformer 304. The secondary winding of the voltage transformer 304 is in, for example, a flying configuration with respect to the remainder of the tactile display device 2000. The amplifiers 302 and 303 are driven with a modulated signal whose components as inputted in a modulator 310 are denoted by 312 and 314. The output of the voltage amplifier 302 is coupled to a controller 316 and in turn, to the conductive region 1004.

In this embodiment, the semiconducting region 254 is charged by way of capacitive connection. In particular, the conductive region 1004 is charged to float at a high potential, thereby transferring or charging the semiconducting region 254 to an electric potential to create an electrosensory sensation to the body member 120.

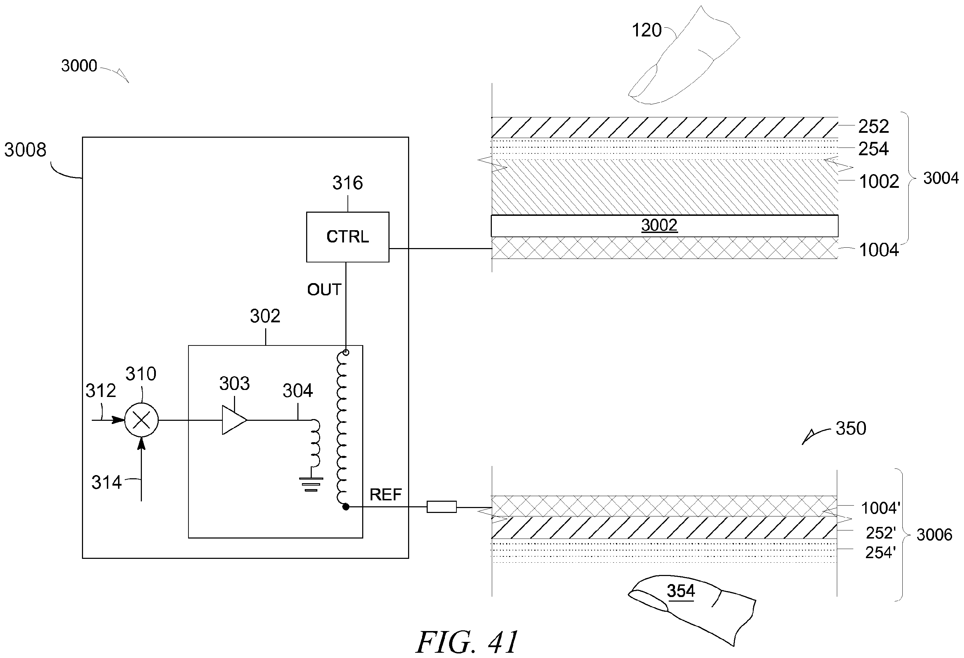

FIG. 41 is a diagram depicting another embodiment of composite sections that comprise a tactile stimulation apparatus 3000, where one of the composite sections is provided in a grounding connection. As depicted, the tactile stimulation apparatus 3000 includes two different composite sections 3004 and 3006 that are connected to circuitry 3008. In one embodiment, the composite section 3004 is a touch screen panel, while composite section 3006 is a grounding connection 350.

The composite section 3004 includes a conductive region 1004, an electronics region 3002 disposed above the conductive region 1004, an insulation region 1002 disposed above the electronics region 3002, a semiconducting region 254 disposed above the insulation region 1002, and another insulation region 252 disposed above the semiconducting region 254. The electronics region 3002 includes various electronics or components of the tactile stimulation apparatus 3000, such as a liquid crystal display, input devices, or other electronics. A surface of the insulation region 252 is configured to be touched by body member 120.

The circuitry 3008, in this embodiment, includes a voltage amplifier 302, which is implemented as a current amplifier 303 followed by a voltage transformer 304. The secondary winding of the voltage transformer 304 is in, for example, a flying configuration with respect to the remainder of the tactile stimulation apparatus 3000. The amplifiers 302 and 303 are driven with a modulated signal whose components as inputted in a modulator 310 are denoted by 312 and 314. The output of the voltage amplifier 302 is coupled to a controller 316 and in turn, to the conductive region 1004. In the depicted embodiment, a grounding connection 350 is included in the tactile stimulation apparatus 3000, and this grounding connection 350 helps to bring a user closer to a well-defined (e.g., non-floating) potential with respect to the voltage section of the tactile stimulation apparatus 3000. The grounding connection 350 connects a reference point REF of the voltage section to a body member 354, which is different from the body member 120 to be stimulated. The reference point REF is at one end of the secondary winding of the transformer 304, while the drive voltage for the composite section 3004, which comprises an electrode, is obtained from the opposite end of the secondary winding. In another embodiment, a resistor (not shown) can be added between the composite section 3004 and the circuitry 3008 or between the composite section 3006 and the circuitry 3008 to cause a phase difference.

In an illustrative embodiment, the tactile stimulation apparatus 3000 is a hand-held apparatus, which comprises a touch screen panel activated by body member 120. The grounding connection 350 terminates at the composite section 3006, which serves as a grounding electrode and can form a surface of the tactile stimulation apparatus 3000. The composite section 3006 can be comprised of different materials. In one embodiment, as depicted in FIG. 41, the composite section 3006 comprises a semiconducting region 254', an insulation region 252', and a conductive region 1004'. The insulation region 252' is disposed between the conductive region 1004' and the semiconducting region 254'. The thickness ranges of the regions 252', 254', and 1004' may be similar to the thickness ranges of regions 252, 254, and 1004, respectively. In one embodiment, a conventional tactile display device (e.g., a smart phone or a touch pad) can be retrofitted to provide electrosensory sensations to body member 120. In one example, the regions 1002, 3002, 1004, and 1004' are part of the conventional tactile display device. The regions 252, 254, 252', 254', and 3008 may be added to the conventional tactile display device to form the tactile stimulation apparatus 3000, which provides electrosensory sensations to body member 120. The addition of the regions 252, 254, 252', 254' to the conventional tactile display device may have the effect of galvanically isolating and floating the conventional tactile display device. The circuitry 3008 provides the electrosensory sensations by driving the tactile stimulation apparatus 3000 as a whole (e.g., its local ground potential) with stimulus signal from the controller 316.

Particularly, the semiconducting region 254' may have a surface that is configured to be touched by body member 354. The conductive region 1004' is connected to a voltage source at the reference point REF. In another embodiment, the composite section 3006 may comprise two semiconducting regions (not shown) and an insulation region (not shown) disposed between the two semiconducting regions. Here, one semiconducting region has a surface that is configured to be touched by the body member 354 while the other semiconducting region is connected to the voltage source at, for example, the reference point REF depicted in FIG. 41. In yet another embodiment, the composite section 3006 may comprise a semiconducting region (not shown) that is proximate to an insulating region (not shown). Here, the insulating region has a surface that is configured to be touched by the body member 354 while the semiconducting region is connected to a voltage source at the reference point REF. In still another embodiment, the composite section 3006 may comprise two conductive regions (not shown) and an insulation region (not shown) disposed between the two conductive regions.

The various embodiments of the composite sections 3006 discussed above may further suppress or prevent electrical shocks to the body member 354 because a semiconducting region of the different composite sections 3006 (e.g., semiconducting region 254') may possibly limit the amount of current flow. Furthermore, the insulation region 252' insulates the conductive region 1004' or another semiconducting region against galvanic contact by the body member 354. The use of the various composite sections 3006 discussed in FIG. 41 may also enhance the sensation of touch, pressure, or vibration from the body member 120 touching the composite section 3004 of the tactile stimulation apparatus 3000.

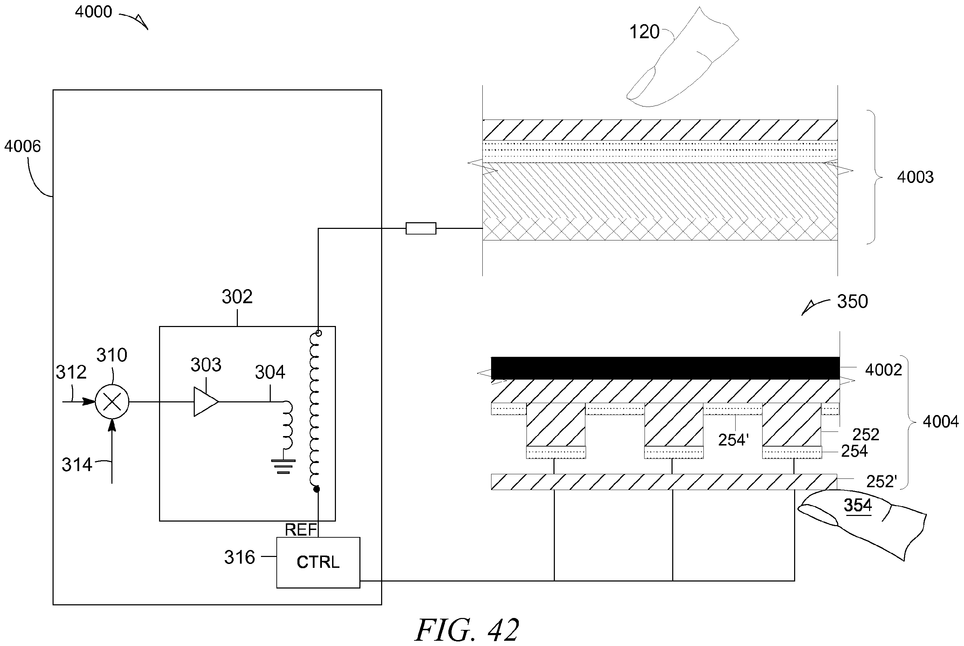

FIG. 42 is a diagram depicting a different embodiment of a composite section provided in a grounding connection. The tactile stimulation apparatus 4000 includes two different composite sections 4003 and 4004 that are connected to circuitry 4006. The composite section 4003 may, for example, be a touch screen panel, and the composite section 4003 may have a variety of different compositions, some of which are discussed above. The other composite section 4004 is a grounding connection 350.

In this embodiment, the circuitry 4006 also includes a voltage amplifier 302, which is implemented as a current amplifier 303 followed by a voltage transformer 304. The secondary winding of the voltage transformer 304 is in, for example, a flying configuration with respect to the remainder of the tactile stimulation apparatus 4000. The amplifiers 302 and 303 are driven with a modulated signal whose components 312 and 314 are inputted into a modulator 310. The output of the voltage amplifier 302 is coupled to a controller 316, and unlike the circuitries discussed above, this controller 316 is connected to the grounding connection 350. In this alternative embodiment, the grounding connection 350 connects a reference point REF of the voltage section to a body member 354, which is different from the body member 120 to be stimulated. The reference point REF is at one end of the secondary winding of the transformer 304, while the drive voltage for the composite section 4003, which comprises an electrode, is obtained from the opposite end of the secondary winding, as depicted in FIG. 42.

As depicted in FIG. 42, the composite section 4004 includes a ground region 4002, and proximate to this ground region 4002 is an insulation region 252 having multiple grooves. In one particular embodiment, each groove is a narrow, rectangular channel cut into the insulation region 252. In the depicted embodiment, semiconducting regions 254 and 254' are overlaid over the insulation region 252, which includes the grooves. For example, the semiconducting regions 254 and 254' may be comprised of strips of semiconducting material overlaid within and outside the grooves. The composite section 4004 additionally comprises another insulation region 252' proximate to the semiconducting regions 254 and 254' and having a surface that is configured to be touched by body member 354. In an alternate embodiment, conductive regions may be overlaid over the insulation region 252 instead of the semiconducting regions 254 and 254'.

Here, the outermost semiconducting regions 254 or portions of semiconducting regions 254 outside of the grooves are connected to the controller 316, thereby creating a galvanic coupling between the reference point REF and the non-stimulated body member 354. The portions of the semiconducting regions 254' within the grooves are capacitively coupled to ground (e.g., ground region 4002) behind the insulation region 252. It should be appreciated that the outermost semiconducting regions 254 are also capacitively coupled to ground, but because they are further away from the ground when compared to the semiconducting regions 254' within the grooves, the capacitive coupling of the semiconducting regions 254' to ground may be stronger than the capacitive coupling of the semiconducting regions 254 to ground.

The use of the various composite sections 4004 discussed in FIG. 42 may improve grounding when compared to, for example, a non-composite surface. Furthermore, the composite section 4004 may also enhance the sensation of touch, pressure, or vibration from the body member 120 touching the composite section 4003 of the tactile stimulation apparatus 4000.

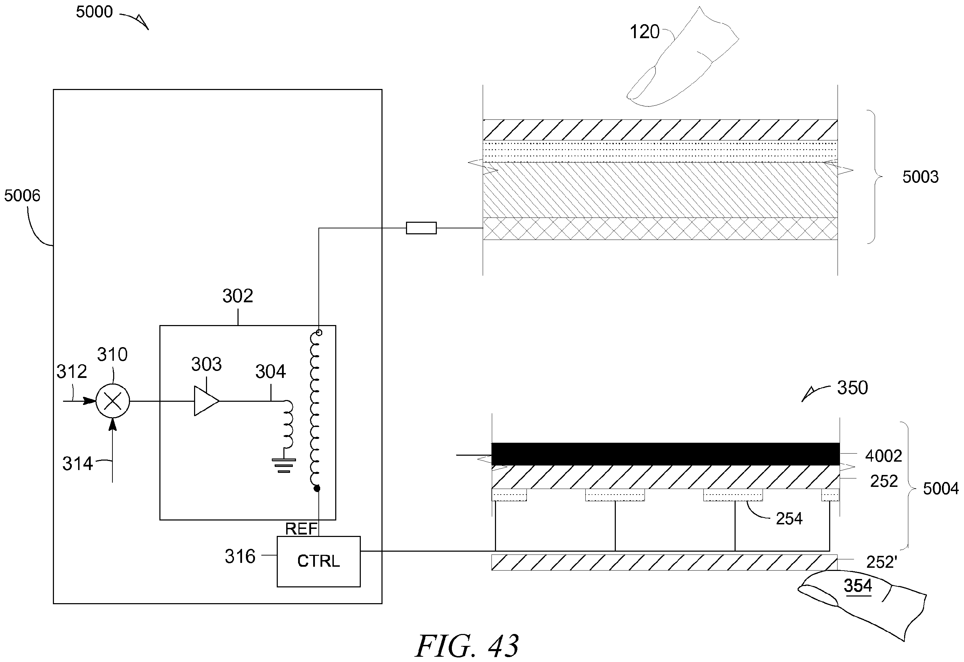

FIG. 43 is a diagram depicting yet another embodiment of a composite section that is provided in a grounding connection. This embodiment of a tactile stimulation apparatus 5000 includes two different composite sections 5003 and 5004 that are connected to circuitry 5006. The composite section 5003 may, for example, be a touch screen panel, and the composite section 5003 may have a variety of different compositions, some of which are discussed above. The other composite section 5004 is a grounding connection 350.

In this embodiment, the circuitry 5006 also includes a voltage amplifier 302, which is implemented as a current amplifier 303 followed by a voltage transformer 304 that is in a floating configuration. The secondary winding of the voltage transformer 304 is in, for example, a flying configuration with respect to the remainder of the tactile stimulation apparatus 5000. The amplifiers 302 and 303 are driven with a modulated signal whose components 312 and 314 are inputted into a modulator 310. The output of the voltage amplifier 302 is coupled to a controller 316, which is connected to the grounding connection 350. In this alternative embodiment, the grounding connection 350 connects a reference point REF of the voltage section to a body member 354, which is different from the body member 120 to be stimulated. The reference point REF is at one end of the secondary winding of the transformer 304, while the drive voltage for the composite section 5003, which comprises an electrode, is obtained from the opposite end of the secondary winding, as depicted in FIG. 43.

As depicted in FIG. 43, the composite section 5004 includes a ground region 4002, and proximate to this ground region 4002 is an insulation region 252. Overlaid over the insulation region 252 are multiple semiconducting regions 254. For example, the semiconducting regions 254 may be comprised of strips of semiconducting material overlaid over the insulation region 252. The composite section 5004 additionally comprises another insulation region 252' proximate to the semiconducting regions 254 and has a surface that is configured to be touched by body member 354. This insulation region 252' may be loosely coupled to the semiconducting regions 254. In an alternate embodiment, conductive regions may be overlaid over the insulation region 252 instead of the semiconducting regions 254.

In this embodiment, the semiconducting regions 254 are connected to the controller 316. When the circuitry 5006 applies voltage to composite section 5003, the insulation region 252' may vibrate because the voltage shrinks the insulation region 252'. Without the voltage, the insulation region 252' returns to its original shape. When the voltage is pulsating, the shrinkage and expansion cause the insulation region 252' to vibrate. This vibration of the insulation region 252' may enhance the sensation of touch, pressure, or vibration from the body member 120 touching the composite section 5003 of the tactile stimulation apparatus 5000. It should be noted that vibration may also be caused by body member 120 having a different polarity. Here, if sufficiently high voltage is applied to the semiconducting region 254, then the person with body members 120 and 354 acts as a ground potential, thereby letting an electromagnetic field generated by the voltage to vibrate the insulation region 252'.

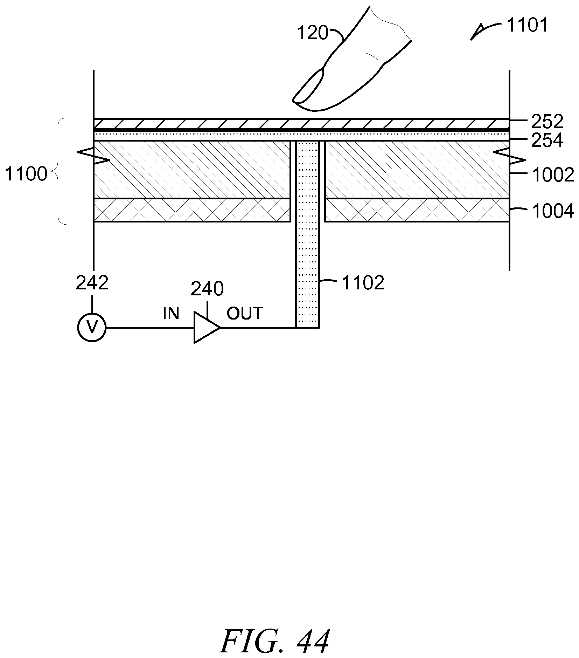

FIG. 44-45 are diagrams depicting a tactile stimulation apparatus 1101 having a connector that connects a semiconducting region of a touch screen panel 1100 to a voltage source 242, in accordance with an example embodiment. As depicted in FIG. 44, this embodiment of the touch screen panel 1100 includes a conductive region 1004, an insulation region 1002 disposed above the conductive region 1004, a semiconducting region 254 disposed above the insulation region 1002, and another insulation region 252 disposed above the semiconducting region 254. The tactile stimulation apparatus 1101 also includes a voltage source 242 and a voltage amplifier 240 coupled to the semiconducting region 254 by way of a connector 1102. Here, the insulation region 1002 and conductive region 1004 may have a small hole to accommodate the connector 1102.

In this example, the voltage source 242 is configured to charge the semiconducting region 254, which functions as an electrode, to an electric potential, thereby producing an electrosensory sensation on the body member 120. The voltage source 242 applies this charge by way of the connector 1102 that physically couples the semiconducting region 254 to the voltage source 242. In this embodiment, the connector 1102 also comprises a semiconducting material, which may suppress or prevent electrical shocks to the body member 120 in the event of a breakdown of both the semiconducting region 254 and the insulation region 252, thereby exposing the connector 1102.

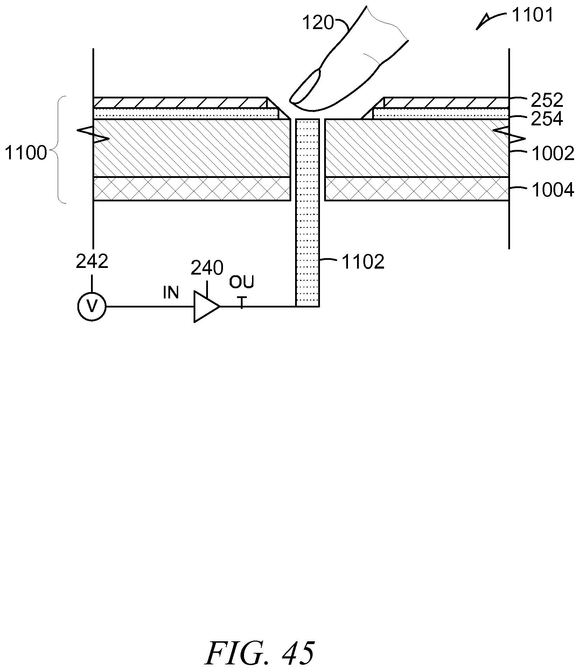

For example, as depicted in FIG. 45, an area of both the semiconducting region 254 and the insulation region 252 may be worn out or broken down such that the connector 1102 is exposed to be touched by the body member 120. As a result, at this particular area, the semiconducting region 254 and the insulation region 252 do not serve to separate or insulate the body member 120 from the circuit comprising at least the voltage amplifier 240 and voltage source 242. In one embodiment, the connector 1102 may also comprise a semiconducting material to suppress or prevent the electrical shock to the body member 120, based on principles discussed above, in the event that the body member 120 touches the exposed connector 1102.

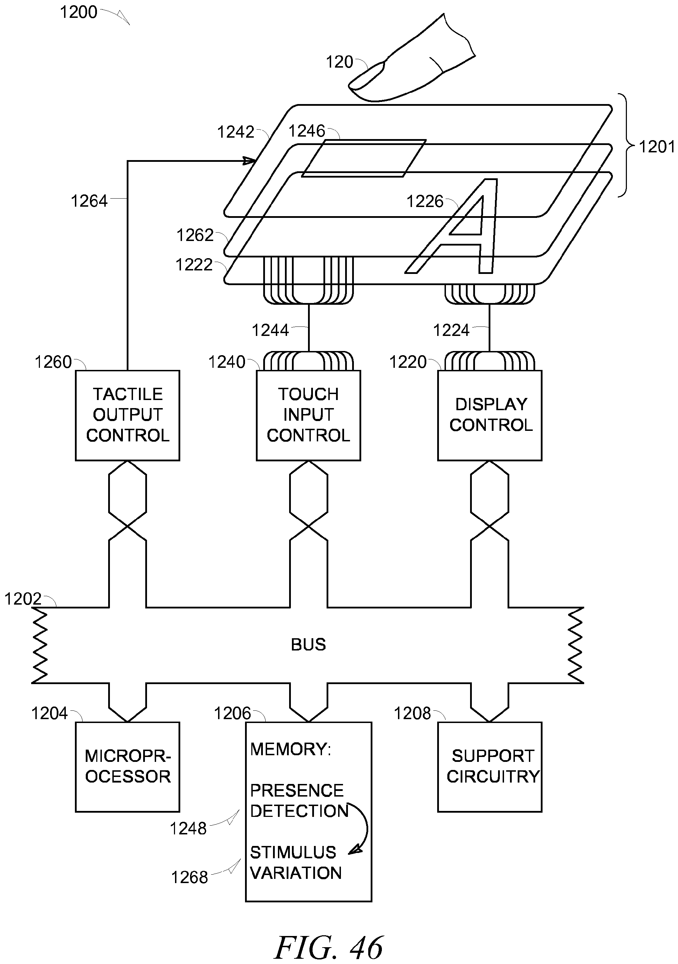

FIG. 46 is a schematic diagram illustrating various components of a haptic device in the example form of a tactile stimulation apparatus 1200, according to some example embodiments. As depicted in FIG. 46, a display region 1222 shows information 1226, which is seen by a user through a touch-sensitive region 1262 and a tactile output region 1242. The touch-sensitive region 1262 is scanned by a touch input controller 1240, such that a microprocessor 1204, under control of instructions (e.g., software) stored in and executed from a memory 1206, is aware of the presence or absence of the body member 120 on top of a predefined area 1246. The composite section of the touch-sensitive region 1262 may be completely homogenous, and the predefined areas, such as area 1246, may be created dynamically by the microprocessor 1204, under control of the instructions, such that the X and Y coordinates of the body member 120, as it touches the touch-sensitive region 1262, are compared with predefined borders of the predefined area 1246.

Reference numeral 1248 denotes a presence-detection logic stored within the memory 1206. Execution of the presence-detection logic 1248 by the microprocessor 1204 may cause the detection of the presence or absence of the body member 120 at the predefined area 1246. A visual cue, such as a name of the function or activity associated with the predefined area 1246, may be displayed by the display region 1222, as part of the displayed information 1226, so as to help the user find the predefined area 1246.

Additionally stored within the memory 1206 may be stimulus-variation logic 1268. Input information to the stimulus-variation logic 1268 may include information on the presence or absence of the body member 120 at the predefined area 1246. Based on this presence information, the stimulus-variation logic 1268 may have the effect that the microprocessor 1204 instructs the tactile output controller 1260 to vary the electrical input to the tactile output region 1242, thus varying the electrosensory sensations caused to the body member 120. Thus, a user may detect the presence or absence of the displayed information at the predefined area 1246 merely by way of tactile information (or electrosensory sensation), that is, without requiring visual clues.

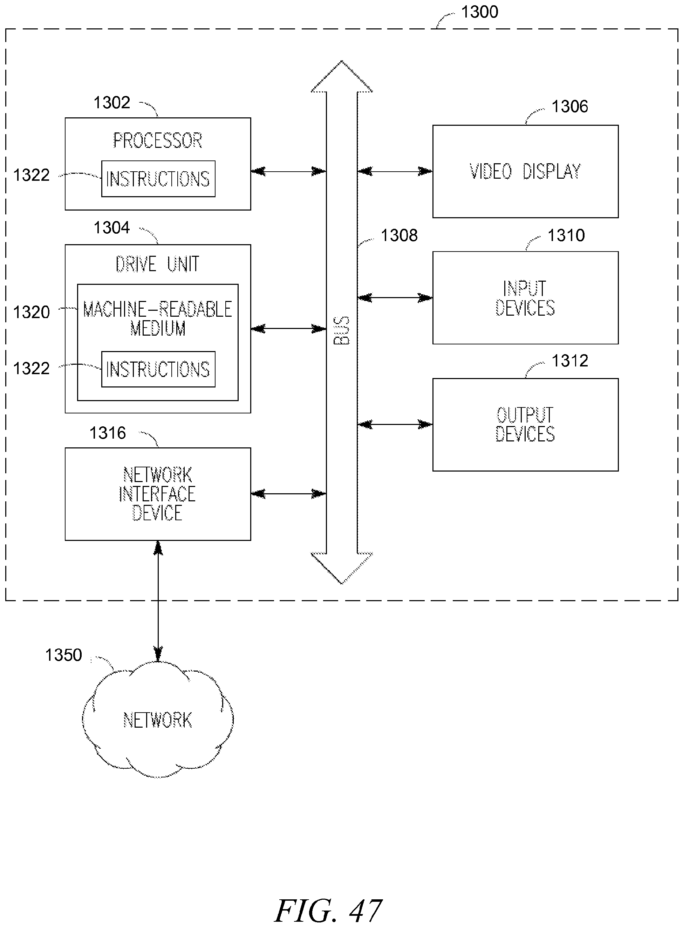

FIG. 47-48 illustrate various components of a system (e.g., a haptic device), according to some example embodiments. Some example embodiments of the system may support or include a "touch and tap keyboard" that enables seeking and resting fingers on the screen of the haptic device. In other words, a user may keep one or more fingers on a virtual keyboard (e.g., for just resting, or having a location reference, such as reference F and J "home" keys). Key selection may be initiated (e.g., triggered) by releasing a finger from a virtual key after tapping the virtual key (e.g., releasing and then touching and releasing).

Examples of conditions for key selection may include:

> a time delay between a previous touch (e.g., seek or stay) and a previous tap (e.g., a delay greater than 200 msec), which may allow for traditional tap typing (e.g., press typing) supported by existing virtual keyboards; and
> a tap duration limit under 500 msec, which may have the effect of excluding long touches (e.g., seek gestures) from being interpreted as key activations.

According to certain example embodiments, a long press may be supported or implemented by using a separate scheme or configuration for the virtual keyboard. Various example embodiments may support one or more variants of such a separate scheme or configuration.

For example, a system (e.g., haptic device) may support "multi-touch and seek." In multi-touch input cases, two "anchor" fingers may rest on screen, but only the finger that is moving activates the seek feedback. This behavior may be easily learnable, for example, in cases where moving two or more fingers prevents the seek feedback.

As another example, a system may support "multi-touch key selection." Key selection by tapping the key activates the key. The finger that taps selects a key below it, and resting fingers do not prevent the tapping (e.g., the detection or recognition of the tapping).

As another example, a single (e.g., first) finger or fingertip may perform the key-location seeking and then stopping on the desired key (e.g., thereby selecting the key for potential activation). Then, another (e.g., second) finger or fingertip may tap (e.g., anywhere on the screen) to trigger (e.g., activate) the key on which the previous (e.g., first) finger stopped.

As another example, the display content (e.g., a webpage in a browser window) may contain textured elements (e.g., an element of the display content that has a feelable texture, such as textured links). The texturing of these elements within the display content may be accomplished using haptic technology discussed elsewhere herein. Accordingly, the user may locate one or more of these textured elements (e.g., links) using seek-mode finger movements. The texturing of these elements may help the user locate one or more elements on the screen, for at least the reason that even small elements can be located based on the tactile sensations in the finger, even when the finger fully or partially covers the element and obscures the element from the user's vision. When the user has located an element that the user would like to select, the user does not have to lift her finger to select the element, as lifting the finger could indicate another seek action (e.g., in seek-mode). Rather, the user may select the element by tapping and lifting with another finger on the screen.

As a further example, a system may support "long press" behavior. According to certain example embodiments, a slightly separate scheme may be used to support "long press" behavior. For instance, a long press (e.g., on a virtual key, such as a space bar) may activate a menu in the form of a slider, a wheel, a list, or any suitable combination or portion thereof. The long press menu may be visually very clearly indicated and may provide haptic feedback that is indicative or characteristic of "long press activation." The long press menu may display one or more options that correspond to the "long press" behavior. Sliding a finger (e.g., fingertip) to the displayed "long press" options selection may involve or include sliding the finger and releasing it. For instance, the user may slide a finger to the intended "long press" menu location (e.g., with a characteristic "long press seek feel" feedback), and within a "long press" time constant (e.g., 1 sec). The user may release and tap to select a particular option. If "long press" behavior is not wanted, the user may simply keep the finger stable and down inside the "long press" menu area for more than a threshold period of time (e.g., 1 sec). In response, the "long press" menu may disappear and not be available unless again activated (e.g., by another "long press").

Examples of conditions for "long press" behavior include:

> menu activation, in which a stable touch to a virtual key for more than a "menu activation time" (e.g., 1 sec.) may cause a long press menu to appear on the screen (see FIG. 8 for an example of such an activation of a long press menu); and

> select item, in which a sliding movement of a finger to a menu item, followed by a subsequent tap on the menu item, may cause the menu item to be selected (see FIG. 9 for an example of such a selection of a long press menu item).

In some example embodiments, a user may leave the long press state or context by continuing to keep a finger in the long press menu longer than a long press "menu key stick time" (e.g., 1 sec.). In response, the menu may disappear. An additional "menu disappeared delay" (e.g., 0.5 sec.) after disappearance of a long press menu may be implemented before activation of the original keyboard below the long press menu. This may have the effect of reducing the risk of accidentally tapping a key for limit cases of the system being too slow with long press selection.

According to various example embodiments, one or more of these touch and tap keyboard features may improve usability in one or more virtual keyboards. Many users may dislike touch screens, because they may feel that touches may sometimes trigger accidental keys or controls. Some users may find themselves consciously attempting to "not touch the screen," lest an accidental key or control be triggered. One or more of the above-mentioned touch and tap keyboard features may have the effect of reducing or eliminating false touches to the screen. Users may learn that, if an accidental touch happens, they may just relax and keep the finger or hand on the screen for a while (e.g., 0.5 to 1 sec). Then, releasing the finger or hand may perform no action.

In example embodiments, a system (e.g., haptic device) supports or provides "context-sensitive haptic browsing" and one or more user interface elements in support thereof. Users of touch-sensitive devices (e.g., tablets or smart phones) may experience difficulties in touching (e.g., tapping on, or sliding to) a particular location on the screen (e.g., a link, a menu item, or an insertion point for editing text). For example, a user may take multiple attempts to make a selection, or raw selections may be common. As another example, different control loads may be accidentally mixed, such as a mode for scrolling the page (e.g., "grab-and-move") and a mode for selecting a link (e.g., "touch and lift"). This may result in a user being left with a feeling of not being fully in control of the device or that there is some inherent inaccuracy in the device or some malfunction in the device.

Certain example embodiments of the system are capable of texture generation via haptics. For example, a user may be able to slide one or more fingers on the screen and feel the locations of links, menu items, or other elements on the screen. To support this, a user interface being presented (e.g., displayed) on the screen may include one or more annotations for haptic texture generation. For example, the system (e.g., haptic device) may interpret an explicit touch (e.g., on the edge of the screen) as a command to freeze scrolling and enable texture generation based on the one or more annotations, which may thereby enable a haptic feel for the user interface in this context. Some example embodiments of the system implement more intuitive mode switching. For example, using an adapted means for exploring and selecting various page content (e.g., links) and for scrolling the page.

Some user interfaces of computer programs executable on touch-screen devices, including several web browsers, may be designed with a notion that a sliding finger should be assumed to move the information "underneath" it (e.g., drag information from one location to another location on the screen). That is, when a user places a finger on the screen and moves the finger, the contents of the screen are updated in a manner that creates an illusion of a larger surface "under" the screen, with the screen showing only a portion of this larger surface, and that the finger "touches" this larger underlying surface and moves it with respect to the screen. For example, a smart phone may be used to display a regular web page, and the web page may be rendered into a large image of which only small portion can be shown at a time on the screen. Then, when the user moves a finger on the screen, the contents of page are moved relative to the screen, so that the user can bring different parts of the page into view on the screen. This notion of interaction may be referred to as a "grab-and-move" mode, where the information content being displayed appears to move together with the finger (e.g., as if dragged by the finger). The "grab-and-move" mode may be contrasted with a "touch and lift" mode that triggers the link to be activated (e.g., statically).

According to certain example embodiments, a system (e.g., haptic device) is configured to implement "context-sensitive grab" of displayed content (e.g., in instead of the "grab-and-move" mode or as a modification of the "grab-and-move" mode). In such example embodiments, when the user places a finger (e.g., fingertip) near a link or other active element that is displayed on the screen, the user can slide the finger and feel a texture type of sensation that indicates the finger is actually on top of the link or other active element. Depending on the example embodiment involved, the selection of the link or other active element may then be performed by lifting the finger, or by holding the finger still on top of the element and tapping with another finger elsewhere on the screen. In some example embodiments, if the user is moving the finger for a longer distance (e.g., to a region of the content without nearby links or other active elements), the system automatically implements (e.g., switches to or reverts to) a normal "grab-and-move" configuration in which the display content moves together with the finger (e.g., as a background image), and the lift does not select any links or other active elements in the content. This feature may allow a user to explore page content by feeling the page content with small movements (e.g., small back-and-forth movements), while larger motions cause the page content to be grabbed and follow the finger as a scroll gesture. This feature may also provide the benefit of enabling haptic feedback for users, without requiring the users to learn new gestures or finger movements.

The system may implement "context-sensitive grab" by implementing a threshold distance for triggering this mode. For example, the system may be configured so that a finger motion less than 10 millimeters in length does not trigger scrolling (e.g., "grab-and-move"), but longer finger motions do trigger scrolling. Accordingly, the system may implement an exploration mode (e.g., "explore mode" or "hold-and-feel" mode) where the distance from the last (e.g., previous) touch position at which the finger stopped is less than 10 millimeters. This last stop position may be determined as the last touch position detected, or the last touch position that has been stable (e.g., with less than two millimeters of motion in any direction) for one second or longer. Moreover, the system may implement a scrolling mode (e.g., "scroll mode") when the explore mode condition is not met (e.g., the finger motion is 10 millimeters or greater). The scrolling mode may be exited when the user lifts the finger.

In accordance with various example embodiments, the system may also provide or support a degree of "inertia" in the initial movement. For example, with a finger move of a small distance, the display content (e.g., as a background image) may slide with inertia and reach full lock with the finger after a longer finger movement. The amount of inertia and the threshold distances of finger movement may be teamed according to individual implementations in order to give an optimum or most intuitive user experience.

The system may implement an "inertial page" by implementing a similar threshold distance for triggering this mode. For example, the system may be configured so that a finger motion of less than five millimeters does not trigger scrolling, but longer finger motions do trigger scrolling. Accordingly, the system may implement an exploration mode (e.g., "explore mode" or "hold-and-feel" mode) with the distance from the last touch position at which the finger stopped is less than five millimeters. As noted above, this last stop position may be determined as the last touch position detected, or the last touch position that has been stable (e.g., with less than two millimeters of motion in any direction) for one second or longer. Moreover, the system may implement a scrolling mode (e.g., "scroll mode") when the explore mode condition is not met (e.g., the finger motion is five millimeters or longer). Upon entering the scrolling mode, the "grab" (e.g., "finger grab") of the page content may or may not be immediate, and the page content may be presented with inertia. Accordingly, the finger touch may "grab" the page content with "friction" and begin smoothly moving the page content with inertia. As noted above, the scrolling mode may be exited when the user lifts the finger.

In some example embodiments, the "inertial page" may be implemented by setting a virtual mass for the page content (e.g., 100 grams). The system may determine (e.g., calculate) that a finger contact (e.g., a finger touch) is moving this virtual mass through a virtual friction force that depends on the speed of the finger contact (e.g., relative motion between the finger and the moving page content). Accordingly, the virtual force that moves the mass of the page content may be expressed as:

$$F = \text{sign}(v\_rel) * F\_nom,$$

where "sign" is the sign of v_rel (e.g., positive or negative), "v_rel" is the relative velocity (e.g., v_finger - v_page), and "F_nom" is a nominal virtual friction force that moves the page mass.

According to various example embodiments, a nominal finger slide speed may be 10 centimeters per second, and the page (e.g., page content) may accelerate to grip (e.g., grab) the finger in about 0.5 seconds. Hence, the acceleration of the page may be 10 cm/s per 0.5 sec = 20 centimeters per second squared, and the friction force may be expressed as F = m * a = 0.1 kg * 0.2 m/s^2 = 20 mN. An average page slip speed between the finger and the page may be 5 cm/s, and a grab slip lag in page motion compared to finger motion may be 5 cm/s & 0.5 s = 2.5 cm.

With a faster finger slide speed, the friction force may be larger, and the system may accordingly provide a faster grab experience for fast gestures. For example, the friction force may follow the following behavior:
If v_finger > v_nom, then F = v_finger / v_nom * F_nom, where "v_nom" is 10 cm/s. Other non-linear behavior may be implemented for the friction force. In some example embodiments, the page may even stick immediately to the finger after the system detects a threshold (e.g., maximum) slide speed. Also, according to various example embodiments, the friction force may follow different behavior for stopping (e.g., decelerating) the page. For example, the friction force for deceleration may be stronger than the friction force for accelerating the page.

In "inertial page" mode, the system may implement haptic textures based on (e.g., in proportion to) the relative slide speed between the finger and the page. For example, if the finger is stuck to the page (e.g., moving with the same speed and direction as the page), no texture is generated by the system.

In accordance with certain example embodiments, the system may implement a "flick for scroll" mode in which no scrolling of page content occurs until the moving finger of the user is lifted (e.g., flicked or flung) and finger speed during the lift is determined. Then, the page content may scroll at a speed that depends on the finger speed and in a direction that depends on the finger direction at the lifting of the finger. Thus, the system may enable a static exploration mode (e.g., "touch and lift") to be the default, and various elements of page content (e.g., links) may be always tactilely perceivable (e.g., "feelable") with texture generation.

With texture generation, haptified browsing (e.g., of web pages or other page content) may be implemented without the user learning any new gestures. The system may implement an exploration mode with a static or mostly static page that has haptic feelable elements, and the page may be scrolled with a single slide gesture. Moreover, within a user interface, texture generation may be implemented by the system to enable haptified list browsing or haptified movement of any one or more control elements in an application (e.g., in the user interface). On a virtual keyboard, one or more keys (e.g., home keys, such as, "f' and "j") may be haptified for quick recognition by touch.

Some example embodiments of the system (e.g., haptic device) configured for texture generation to be described as a "feelscreen" with "feel scrolling." As noted above, as a user scrolls the contents of a user interface (e.g., a web page, an email list, or an array of application icons operable to launch applications), the user may feel the contents as informative and pleasant textures (e.g., crisp edges) as his finger moves across the screen of the system. In certain example embodiments, as the user's finger moves across the screen, the screen image moves with the finger, but at a slightly slower speed, thus allowing the user to feel the area of the screen over which the finger is crossing. Hence, when a user slides a finger 10 cm on the screen, in either a horizontal direction or a vertical direction, the underlying content of a virtual page (e.g., a virtual page larger than the screen) under the finger may move only 5 cm. However, smoother operation of the page may be attained by taking into account more complicated finger movements and accelerations. For example, a flicking motion may cause the underlying page to roll or scroll, even after the finger is no longer touching the screen.

Accordingly, "feel scrolling" may improve the accuracy and usability of the user interface. For example, "feel scrolling" may enable the user to sense (e.g., virtually "see") with his fingertip what is under his finger. Hence, the user may obtain information on whether his finger is on top of a link (e.g., an image that is a link), and accordingly, the user may avoid an accidental selection of that link. As another example, it may enable localization of a small object (e.g., element) and enable selection of the small objects without lifting the finger (e.g., by detecting a tap performed with another finger). In some example embodiments, the "touch and tap keyboard" discussed above may be implemented in conjunction with texture generation. The increased tactility of a device that implements "feel scrolling" may increase the personal connection that a user has with the device. The improved usability of the device may increase user satisfaction with the device. Content presented on the device may be perceived as being more engaging compared to content presented on a device without "feel scrolling." Thus, "feel scrolling" may provide a new sensory channel for various applications that may be executed by the device (e.g., via a software development kit for games or other applications).

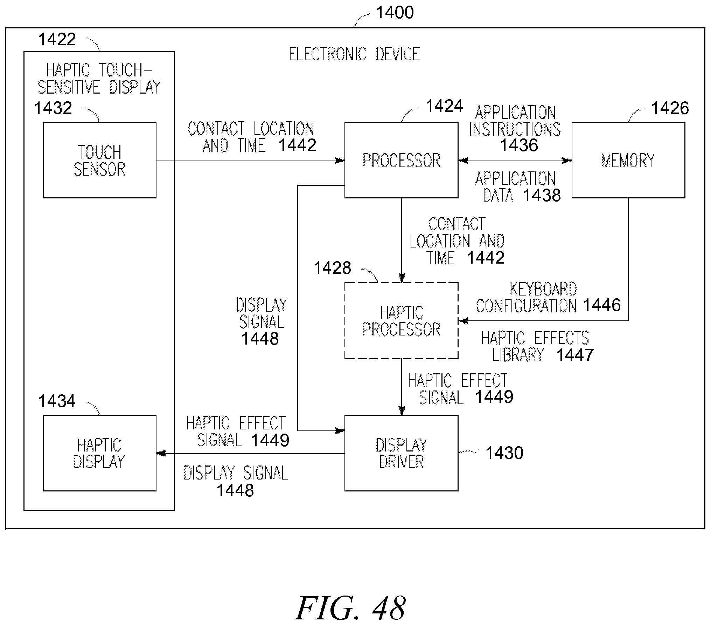

As shown in FIG. 48, an electronic device 1400 may embody all or part of any one or more of the components, machines, systems, or devices discussed herein, and the electronic device 1400 may perform all or part of any one or more of the methodologies discussed herein. The electronic device 1400 includes a touch sensor 1432 and a haptic display 1434. In various example embodiments, the touch sensor 1432 is replaced or supplemented with a motion sensor, a depth sensor, or any suitable combination thereof.

The touch sensor 1432 and the haptic display 1434 may form all or part of a haptic touch-sensitive display 1422. The touch sensor 1432 is configured (e.g., through its constituent hardware, its embedded software, or both) to detect contact by the body member 120. In particular, the touch sensor 1432 may provide other components of the electronic device 1400 with contact information that describes a contact (e.g., a touch or a movement) made by the body member 120 (e.g., on the haptic touch-sensitive display 1422). For example, the contact information may be or include a contact location and time 1442 that describes a location (e.g., on the touch sensor 1432, on the haptic touch-sensitive display 1422, or both) and a time at which the contact by the body member 120 was detected by the touch sensor 1432.

A processor 1424 may be included in the device 1400, and the processor 1424 may be configured to access information from other components of the electronic device 1400. As shown in FIG. 48, the contact location and time 1442 may be provided to the processor 1424 which may execute application instructions 1436 stored in a memory 1426. The memory 1426 may also store application data 1438, which may be provided to the processor 1424 (e.g., for use in executing the application instructions 1436).

A haptic processor 1428 may be included in the electronic device 1400, and haptic processor 1428 may be configured (e.g., by software, such as all or part of the application instructions 1436) to access information from other components of the electronic device 1400. In some example embodiments, the haptic processor 1428 is included in the processor 1424. FIG. 48 additionally shows the processor 1424 sending a display signal 1448 to a display driver 1430 (e.g., for use in generating a display signal 1448 for display on the haptic display 1434). In the example shown in FIG. 48, the haptic processor 1428 may be configured to access or receive the contact location and time 1442 from the processor 1424. The haptic processor 1428 may be configured to access or receive a keyboard configuration 1446, which may be stored in the memory 1426. Similarly, the memory 1426 may store all or part of a haptic effects library 1447, and haptic processor 1428 may access or receive all or part of the haptic effects library 1447 from the memory 1426. Accordingly, the haptic processor 1428 may generate a haptic effect signal 1449, and the haptic effect signal 1449 may be provided to the display driver 1430 (e.g., for use in generating a haptic effect on the haptic display 1434).

The haptic display 1434 may be a touch-screen display or a touch-pad display. In the example shown in FIG. 48, the haptic display 1434 is configured (e.g., through its constituent hardware, its embedded software, or both) to present visual information specified by the display signal 1448 (e.g., a webpage, a document, a game, or a message), present haptic information specified by the haptic effect signal 1449 (e.g., haptic elements, feelable elements, tactilely perceivable elements, textures, Braille text, or other data perceivable by touch), or both, as described elsewhere herein. In some example embodiments, the visual information may have an element that is visually perceptible (e.g., "visible," such as a blue circle on a red background) or visually imperceptible (e.g., "hidden," such as a blue circle on a blue background).

In certain example embodiments, the visual information represents display content (e.g., a webpage) that is presentable on a screen, whether visually perceptible or not, and the haptic information represents tactilely perceivable content (e.g., a feelable link or other element in the webpage) within the display content or located coincident with a portion of the display content, where the tactilely perceivable content may be presentable on a haptic device or haptic interface to a device. Hence, the visual information may include an element (e.g., a portion of the visual information) that is visually perceivable (e.g., a link or image), and the haptic information may render this element tactilely perceivable (e.g., as a texture). As noted above, some example embodiments of the visual information may include an element that is visually imperceptible (e.g., "hidden"), and the haptic information may render this element tactilely perceivable (e.g., for discovery by feel, but not by sight).

Accordingly, based on the application data 1438 and execution of the application instructions 1436, the processor 1424 may generate the display signal 1448. Similarly, based on the contact location and time 1442, the keyboard configuration 1446, the haptic effects library 1447, or any suitable combination thereof, the haptic processor 1428 may generate the haptic effect signal 1449. The display driver 1430 may receive the display signal 1448 and the haptic effect signal 1449 and use these signals to fully or partially control the haptic display 1434.

Thus, the electronic device 1400 may operate to present visual information, haptic information, or both, on the haptic touch-sensitive display 1422, based on the contact location and time 1442. According to various example embodiments, multiple instances of the contact location and time 1442 correspond to multiple touches (e.g., taps or presses) or movements (e.g., flicks, slides, or drags) from one or more body members (e.g., body member 120), an electronic device 1440 may present visual information, haptic information, or both, based on these multiple instances of the contact location and time 1442. For example, two fingers (e.g., a left thumb and a right index finger) may constitute body members that provide multiple instances of the contact location and time 1442. As another example, three fingers (e.g., a left thumb, a right index finger, and a right middle finger) may constitute body members that provide such multiple instances of the contact location and time 1442.

The visual information specified by the display signal 1448 is merely an example of information that may be presented (e.g., display) by the haptic display 1434. Such information presented by the haptic display 1434 need not be visual (e.g., visually perceptible or visually imperceptible), but rather may be any type of presentable information. According to various example embodiments, the visual information may be replaced or supplemented with auditory information (e.g., sounds), tactile information (e.g., haptic effects), olfactory information (e.g., scents), flavor information (e.g., tastes), or any suitable combination thereof.

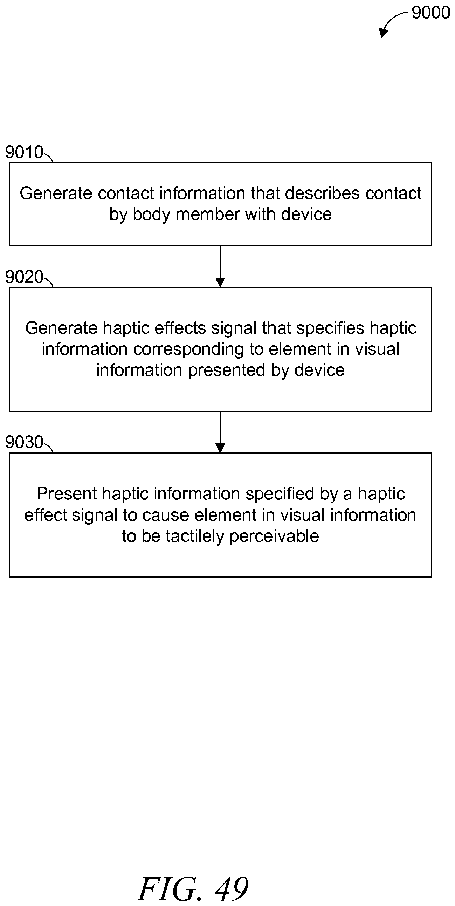

FIG. 49 is a flowchart illustrating operations in a method 9000 of operating a haptic device (e.g., tactile stimulation apparatus 150, electronic device 1400, or any suitable combination thereof) with a touch gesture interface, according to various example embodiments. Such a haptic device may be configured to support one or more of the features described elsewhere herein, for example, using one or more components discussed above with respect to FIG. 48.

The method 9000 is shown as including operations 9010, 9020, and 9030. In operation 9010, a sensor (e.g., touch sensor 1432, a motion sensor like Kinect® by Microsoft®, a depth sensor, or any suitable combination thereof) generates contact information (e.g., contact location and time 1442) that describes a contact (e.g., a touch or movement) by a body member (e.g., body member 120) with the haptic device. As noted above, the haptic device may be configured to present visual information (e.g., information content, screen content, page content, or a web page), for example, via a touch-sensitive display (e.g., haptic touch-sensitive display 1422).

In operation 9020, a processor (e.g., haptic processor 1428) generates a haptic effect signal (e.g., haptic effect signal 1449) that specifies haptic information corresponding to an element included in the visual information (e.g., a link on a webpage or an image in a document). This haptic effect signal may be generated based on the contact information (e.g., contact location and time 1442) discussed above with respect to operation 9010.

In operation 9030, a display (e.g., haptic display 1434) presents the haptic information specified by the haptic effect signal generated in operation 9020. The presenting of the haptic information causes the element included in the visual information to be tactilely perceivable (e.g., by the body member 120 or another body member). Performance of the method 9000 may have the effect of initiating a "hold-and-feel" mode or an "explore" mode in which one or more body members (e.g., body member 120) may contact a touch screen of the device and tactilely perceive one or more elements presented in or with the visual information.

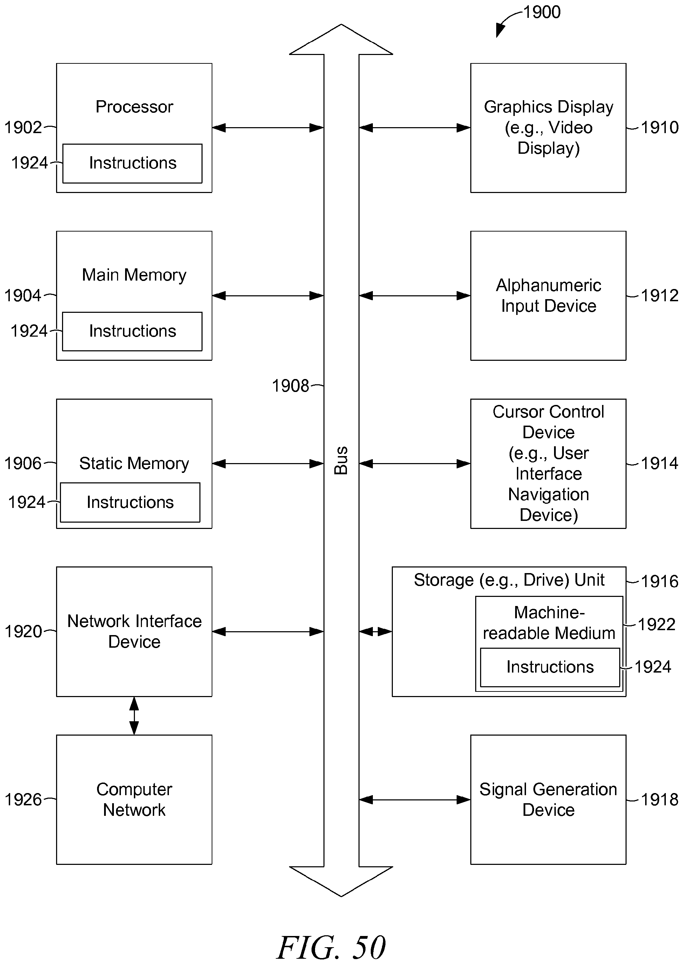

Any of the components, machines, systems, or devices shown or discussed with respect to FIG. 1-49 may be implemented in a general-purpose computer modified (e.g., configured or programmed) by software to be a special-purpose computer to perform the functions described herein for that component, machine, system, or device. For example, a computer system able to implement any one or more of the methodologies described herein is discussed with respect to FIG. 50. Moreover, any two or more of the example components, machines, systems, or devices discussed herein may be combined into a single component, machine, system, or device, and the functions described herein for any single component, machine, system, or device may be subdivided among multiple components, machines, systems, or devices.

Any one or more of the modules or components described herein may be implemented using hardware (e.g., a processor of a machine) or a combination of hardware and software. For example, any module or component described herein may configure a processor to perform the operations described herein for that module. Moreover, any two or more of these modules or components may be combined into a single module or component, and the functions described herein for a single module or component may be subdivided among multiple modules or components.

FIG. 50 is a block diagram illustrating components of a machine 1900, according to some example embodiments, able to read instructions from a machine-readable medium (e.g., a machine-readable storage medium) and perform any one or more of the methodologies discussed herein. Specifically, FIG. 50 shows a diagrammatic representation of the machine 1900 in the example form of a computer system and within which instructions 1924 (e.g., software, a program, an application, an applet, an app, or other executable code) for causing the machine 1900 to perform any one or more of the methodologies discussed herein may be executed. In alternative embodiments, the machine 1900 operates as a standalone device or may be connected (e.g., networked) to other machines. In a networked deployment, the machine 1900 may operate in the capacity of a server machine or a client machine in a server-client network environment, or as a peer machine in a peer-to-peer (or distributed) network environment. The machine 1900 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions 1924, sequentially or otherwise, that specify actions to be taken by that machine. Further, while only a single machine is illustrated, the term "machine" shall also be taken to include a collection of machines that individually or jointly execute the instructions 1924 to perform any one or more of the methodologies discussed herein.

The machine 1900 includes a processor 1902 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 1904, and a static memory 1906, which are configured to communicate with each other via a bus 1908. The machine 1900 may further include a graphics display 1910 (e.g., a plasma display panel (PDP), a light emitting diode (LED) display, a liquid crystal display (LCD), a projector, or a cathode ray tube (CRT)). The machine 1900 may also include an alphanumeric input device 1912 (e.g., a keyboard), a cursor control device 1914 (e.g., a mouse, a touchpad, a trackball, a joystick, a motion sensor, or other pointing instrument), a storage unit 1916, a signal generation device 1918 (e.g., a speaker), and a network interface device 1920.

The storage unit 1916 includes a machine-readable medium 1922 on which is stored the instructions 1924 embodying any one or more of the methodologies or functions described herein. The instructions 1924 may also reside, completely or at least partially, within the main memory 1904, within the processor 1902 (e.g., within the processor's cache memory), or both, during execution thereof by the machine 1900. Accordingly, the main memory 1904 and the processor 1902 may be considered as machine-readable media. The instructions 1924 may be transmitted or received over a network 1926 via the network interface device 1920.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 1922 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions for execution by a machine (e.g., machine 1900), such that the instructions, when executed by one or more processors of the machine (e.g., processor 1902), cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

**Claims**

1. A device comprising:

a sensor configured to generate contact information that describes a gesture by a first body member with the device as the device presents visual information in a grab-and-move mode, in which grab-and-move mode the visual information is presented to move together with the first body member with respect to a touch screen of the device, and to generate further contact information that describes a further contact by a further body member on the touch screen of the device during the gesture by the first body member;
a haptic processor configured to generate a haptic effect signal that specifies haptic information that corresponds to an element included in the visual information being presented by the device,
the generating of the haptic effect signal being based on the contact information that describes the contact by the further body member with the device; and

a haptic display configured to present the haptic information specified by the haptic effect signal, the presenting of the haptic information causing the element included in the visual information being presented by the device to be tactilely perceivable by the further body member,
wherein upon detection of said gesture by the first body member said device enters a hold-and-feel mode; in which hold-and-feel mode the haptic display is configured to present the visual information stationary with respect to the screen of the device.

2. The device of claim 1, wherein:
the sensor is configured to detect the gesture by the first body member as a touch by the first body member on a corner of the touch screen of the device.

3. The device of claim 1 or 2, wherein:
the sensor is configured to detect the gesture by the first body member as a movement of the first body member on a surface of the touch screen.

4. The device of any of the preceding claims, wherein:
the sensor is configured to detect the gesture by the first body member as a touch by the first body member on a side of the touch screen.

5. The device of any of the preceding claims, wherein:
the haptic processor is configured to generate the haptic effect signal in response to the contact information indicating that the contact of the further body member exceeds a threshold duration.

6. The device of any of the preceding claims, wherein:
the haptic processor is configured to generate the haptic effect signal in response to the contact information indicating that the gesture by the first body member is stationary with respect to the touch-sensitive display.

7. The device of any of the preceding claims, wherein:

the further contact information describes multiple further contacts by multiple further body members on the touch screen; and
the modification of the visual information includes zooming the visual information with respect to the touch screen based on movements of the further body members on the touch screen.

8. The device of any of the preceding claims, wherein:

the element included in the visual information is a key within a virtual keyboard; and
the presenting of the haptic information causes the key within the virtual keyboard to be a tactilely perceivable key in the virtual keyboard.

9. The device of any of the preceding claims, wherein:

the element included in the visual information is visually perceptible; and
the presenting of the haptic information causes the visually perceptible element to be a tactilely perceivable element in the visual information.

10. A method comprising:

generating contact information that describes a gesture by a first body member with a device as the device presents visual information in a grab-and-move mode, in which grab-and-move mode the visual information is presented to move together with the first body member with respect to a screen of the device;
generating further contact information that describes a further contact by a further body member on a touch screen of the device during the gesture by the first body member;
generating a haptic effect signal that specifies haptic information that corresponds to an element included in the visual information being presented by the device,
the generating of the haptic effect signal being performed by a haptic processor based on the contact information that describes the contact by the further body member with the device; and
presenting the haptic information specified by the haptic effect signal,
the presenting of the haptic information causing the element included in the visual information being presented by the device to be tactilely perceivable by the body member; and
entering a hold-and-feel mode upon detection of said gesture by the first body member; in which hold-and-feel mode the haptic display is configured to present the visual information stationary with respect to the screen of the device.

11. A non-transitory machine-readable storage medium comprising instructions that, when executed by one or more processors of a device, cause the device to perform operations comprising:

generating contact information that describes a gesture by a first body member with the device as the device presents visual information in a grab-and-move mode, in which grab-and-move mode the visual information is presented to move together with the first body member with respect to a screen of the device;
generating further contact information that describes a further contact by a further body member on a touch screen of the device during the gesture by the first body member;
generating a haptic effect signal that specifies haptic information that corresponds to an element included in the visual information being presented by the device,
the generating of the haptic effect signal being performed by the one or more processors of the device based on the contact information that describes the contact by the further body member with the device; and
presenting the haptic information specified by the haptic effect signal,
the presenting of the haptic information causing the element included in the visual information being presented by the device to be tactilely perceivable by the body member; and
entering a hold-and-feel mode upon detection of said gesture by the first body member; in which hold-and-feel mode the haptic display is configured to present the visual information stationary with respect to the screen of the device.

**Patentansprüche**

1. Vorrichtung, umfassend:

einen Sensor, der konfiguriert ist, zum Erzeugen von Kontaktinformation, die eine Geste durch ein erstes Körperelement mit der Vorrichtung beschreibt, wenn die Vorrichtung visuelle Information in einem Greifen-und-Bewegen-Modus darstellt, wobei in dem Greifen-und-Bewegen-Modus die visuelle Information zum Bewegen zusammen mit dem ersten Körperelement in Bezug auf einen Berührungsbildschirm der Vorrichtung dargestellt wird, und zum Erzeugen weiterer Kontaktinformation, die während der Geste durch das erste Körperelement einen weiteren Kontakt durch ein weiteres Körperelement auf dem Berührungsbildschirm der Vorrichtung beschreibt;
einen haptischen Prozessor, der zum Erzeugen eines Haptik-Effekt-Signals konfiguriert ist, das haptische Information spezifiziert, die einem Element entspricht, das in der visuellen Information enthalten ist, die von der Vorrichtung dargestellt wird,
wobei das Erzeugen des Haptik-Effekt-Signals auf der Kontaktinformation basiert, die den Kontakt durch das weitere Körperelement mit der Vorrichtung beschreibt; und
eine haptische Anzeige konfiguriert ist zum Darstellen der durch das Haptik-Effekt-Signal spezifizierten haptischen Information, wobei das Darstellen der haptischen Information bewirkt, dass das in der visuellen Information enthaltene Element von der Vorrichtung als durch das weitere Körperelement taktil wahrnehmbar dargestellt wird,

wobei nach Erfassen der Geste durch das erste Körperelement die Vorrichtung in einen Halten- und-Fühlen-Modus eintritt; wobei in diesem Halten-und-Fühlen-Modus die haptische Anzeige konfiguriert ist zum Darstellen der visuellen Information stationär in Bezug auf den Bildschirm der Vorrichtung.

2. Vorrichtung nach Anspruch 1, wobei:
der Sensor konfiguriert ist zum Erfassen der Geste durch das erste Körperelement als eine Berührung durch das erste Körperelement an einer Ecke des Berührungsbildschirms der Vorrichtung.

3. Vorrichtung nach Anspruch 1 oder 2, wobei:
der Sensor konfiguriert ist zum Erfassen der Geste durch das erste Körperelement als eine Bewegung des ersten Körperelements auf einer Fläche des Berührungsbildschirms.

4. Vorrichtung nach einem der vorhergehenden Ansprüche, wobei:
der Sensor konfiguriert ist zum Erfassen der Geste durch das erste Körperelement als eine Berührung durch das erste Körperelement auf einer Seite des Berührungsbildschirms.

5. Vorrichtung nach einem der vorhergehenden Ansprüche, wobei:
der haptische Prozessor konfiguriert ist zum Erzeugen des Haptik-Effekt-Signals als Reaktion auf die Kontaktinformation, die anzeigt, dass der Kontakt des weiteren Körperelements eine Schwellenwertdauer überschreitet.

6. Vorrichtung nach einem der vorhergehenden Ansprüche, wobei:
der haptische Prozessor konfiguriert ist zum Erzeugen des Haptik-Effekt-Signals als Reaktion auf die Kontaktinformation, die anzeigt, dass die Geste durch das erste Körperelement in Bezug auf den Berührungsbildschirm stationär ist.

7. Vorrichtung nach einem der vorhergehenden Ansprüche, wobei:

die weitere Kontaktinformation mehrere weitere Kontakte durch mehrere weitere Körperelemente auf dem Berührungsbildschirm beschreibt; und
die Modifikation der visuellen Information das Zoomen der visuellen Information in Bezug auf den Berührungsbildschirm auf Basis von Bewegungen der weiteren Körperelemente auf dem Berührungsbildschirm umfasst.

8. Vorrichtung nach einem der vorhergehenden Ansprüche, wobei:

das in der visuellen Information enthaltene Element eine Taste innerhalb einer virtuellen Tastatur ist; und
die Darstellung der haptischen Information bewirkt, dass die Taste innerhalb der virtuellen Tastatur eine taktil wahrnehmbare Taste auf der virtuellen Tastatur ist.

9. Vorrichtung nach einem der vorhergehenden Ansprüche, wobei:

das in der visuellen Information enthaltene Element visuell wahrnehmbar ist; und
die Darstellung der haptischen Information bewirkt, dass das visuell wahrnehmbare Element ein taktil wahrnehmbares Element in der visuellen Information ist.

10. Verfahren, umfassend:

Erzeugen von Kontaktinformation, die eine Geste durch ein erstes Körperelement mit einer Vorrichtung beschreibt, wenn die Vorrichtung visuelle Information in einem Greifen-und-Bewegen-Modus darstellt, wobei in dem Greifen-und-Bewegen-Modus die visuelle Information zusammen mit dem ersten Körperelement in Bezug auf einen Bildschirm der Vorrichtung zum Bewegen dargestellt wird;
Erzeugen weiterer Kontaktinformation, die während der Geste durch das erste Körperelement einen weiteren Kontakt durch ein weiteres Körperelement auf einem Berührungsbildschirm der Vorrichtung beschreibt;
Erzeugen eines Haptik-Effekt-Signals, das haptische Information spezifiziert, die einem Element entspricht, das in der visuellen Information enthalten ist, die von der Vorrichtung dargestellt wird,
wobei das Erzeugen des Haptik-Effekt-Signals von einem haptischen Prozessor auf Basis der Kontaktinformation durchgeführt wird, die den Kontakt durch das weitere Körperelement mit der Vorrichtung beschreibt; und
Darstellen der durch das Haptik-Effekt-Signal spezifizierten haptischen Information,
wobei das Darstellen der haptischen Information bewirkt, dass das in der visuellen Information enthaltene Element durch die Vorrichtung als vom Körperelement taktil wahrnehmbar dargestellt wird; und
Eintritt in einen Halten-und-Fühlen-Modus nach Erfassen der Geste durch das erste Körperelement; wobei im Halten-und-Fühlen-Modus die haptische Anzeige konfiguriert ist zum Darstellen der visuellen Information stationär in Bezug auf den Bildschirm der Vorrichtung.

11. Nichtflüchtiges maschinenlesbares Speichermedium, das Anweisungen umfasst, die, wenn sie von einem oder mehreren Prozessoren einer Vorrichtung ausgeführt werden, die Vorrichtung bewirken, Vorgänge auszuführen, die Folgendes umfassen:

Erzeugen von Kontaktinformation, die eine Geste durch ein erstes Körperelement mit der Vorrichtung beschreibt, wenn die Vorrichtung visuelle Information in einem Greifen-und-Bewegen-Modus darstellt, wobei in dem Greifen-und-Bewegen-Modus die visuelle Information zusammen mit dem ersten Körperelement in Bezug auf einen Bildschirm der Vorrichtung zum Bewegen dargestellt wird;

Erzeugen weiterer Kontaktinformation, die während der Geste durch das erste Körperelement einen weiteren Kontakt durch ein weiteres Körperelement auf einem Berührungsbildschirm der Vorrichtung beschreibt;

Erzeugen eines Haptik-Effekt-Signals, das haptische Information spezifiziert, die einem Element entspricht, das in der visuellen Information enthalten ist, die von der Vorrichtung dargestellt wird,

wobei das Erzeugen des Haptik-Effekt-Signals von dem einen oder den mehreren Prozessoren der Vorrichtung auf Basis der Kontaktinformation durchgeführt wird, die den Kontakt durch das weitere Körperelement mit der Vorrichtung beschreibt; und

Darstellen der durch das Haptik-Effekt-Signal spezifizierten haptischen Information,

wobei das Darstellen der haptischen Information bewirkt, dass das in der visuellen Information enthaltene Element durch die Vorrichtung als vom Körperelement taktil wahrnehmbar dargestellt wird; und

Eintritt in einen Halten-und-Fühlen-Modus nach Erfassen der Geste durch das erste Körperelement; wobei im Halten-und-Fühlen-Modus die haptische Anzeige konfiguriert ist zum Darstellen der visuellen Information stationär in Bezug auf den Bildschirm der Vorrichtung.

**Revendications**

1. Dispositif comprenant :

un capteur configuré pour générer des informations de contact qui décrivent un geste effectué par un premier élément du corps avec le dispositif alors que le dispositif présente des informations visuelles dans un mode saisir-et-déplacer, dans lequel mode saisir-et-déplacer les informations visuelles sont présentées pour se déplacer avec le premier élément du corps par rapport à un écran tactile du dispositif, et pour générer d'autres informations de contact qui décrivent un autre contact par un autre élément du corps sur l'écran tactile du dispositif pendant l'exécution du geste par le premier élément du corps ;

un processeur haptique configuré pour générer un signal d'effet haptique qui spécifie des informations haptiques qui correspondent à un élément inclus dans les informations visuelles présentées par le dispositif,

dans lequel la génération du signal d'effet haptique est basée sur les informations de contact qui décrivent le contact par l'autre élément du corps avec le dispositif ; et

un afficheur haptique configuré pour présenter les informations haptiques spécifiées par le signal d'effet haptique, dans lequel la présentation des informations haptiques amène l'élément inclus dans les informations visuelles présentées par le dispositif à être perceptible de manière tactile par l'autre élément du corps,

dans lequel, lors de la détection dudit geste effectué par le premier élément du corps, ledit dispositif entre dans un mode tenir-et-sentir ; dans lequel mode tenir-et-sentir l'afficheur haptique est configuré pour présenter les informations visuelles fixes par rapport à l'écran du dispositif.

2. Dispositif selon la revendication 1, dans lequel : le capteur est configuré pour détecter le geste effectué par le premier élément du corps en tant que contact du premier élément du corps sur un coin de l'écran tactile du dispositif.

3. Dispositif selon la revendication 1 ou 2, dans lequel : le capteur est configuré pour détecter le geste effectué par le premier élément du corps en tant que mouvement du premier élément du corps sur une surface de l'écran tactile.

4. Dispositif selon l'une quelconque des revendications précédentes, dans lequel : le capteur est configuré pour détecter le geste effectué par le premier élément du corps en tant que contact par le premier élément du corps sur un côté de l'écran tactile.

5. Dispositif selon l'une quelconque des revendications précédentes, dans lequel : le processeur haptique est configuré pour générer le signal d'effet haptique en réponse aux informations de contact indiquant que le contact de l'autre élément du corps dépasse une durée de seuil.

6. Dispositif selon l'une quelconque des revendications précédentes, dans lequel :

le processeur haptique est configuré pour générer le signal d'effet haptique en réponse aux informations de contact indiquant que le geste effectué par le premier élément du corps est fixe par rapport à l'afficheur tactile.

7. Dispositif selon l'une quelconque des revendications précédentes, dans lequel :

les autres informations de contact décrivent de multiples autres contacts par de multiples autres éléments du corps sur l'écran tactile ; et la modification des informations visuelles comprend le grossissement des informations visuelles par rapport à l'écran tactile sur la base des mouvements des autres éléments de corps sur l'écran tactile.

8. Dispositif selon l'une quelconque des revendications précédentes, dans lequel :

l'élément inclus dans les informations visuelles est une touche dans un clavier virtuel ; et la présentation des informations haptiques amène la touche dans le clavier virtuel à être une touche perceptible de manière tactile dans le clavier virtuel.

9. Dispositif selon l'une quelconque des revendications précédentes, dans lequel :

l'élément inclus dans les informations visuelles est perceptible visuellement ; et la présentation des informations haptiques amène l'élément perceptible visuellement à être un élément perceptible de manière tactile dans les informations visuelles.

10. Procédé comprenant :

la génération d'informations de contact qui décrivent un geste effectué par un premier élément du corps avec un dispositif alors que le dispositif présente des informations visuelles dans un mode saisir-et-déplacer, dans lequel mode saisir-et-déplacer les informations visuelles sont présentées pour se déplacer avec le premier élément du corps par rapport à un écran du dispositif ; la génération d'autres informations de contact qui décrivent un autre contact par un autre élément du corps sur un écran tactile du dispositif pendant l'exécution du geste par le premier élément du corps ; la génération d'un signal d'effet haptique qui spécifie des informations haptiques qui correspondent à un élément inclus dans les informations visuelles présentées par le dispositif, dans lequel la génération du signal d'effet haptique est effectuée par un processeur haptique sur la base des informations de contact qui décrivent le contact par l'autre élément du corps avec le dispositif ; et la présentation des informations haptiques spécifiées par le signal d'effet haptique, dans lequel la présentation des informations haptiques amène l'élément inclus dans les informations visuelles présentées par le dispositif à être perceptible de manière tactile par l'élément du corps ; et l'entrée dans un mode tenir-et-sentir lors de la détection dudit geste effectué par le premier élément du corps ; dans lequel mode tenir-et-sentir l'afficheur haptique est configuré pour présenter les informations visuelles fixes par rapport à l'écran du dispositif.

11. Support de mémorisation non transitoire pouvant être lu par une machine comprenant des instructions qui, lorsqu'elles sont exécutées par un ou plusieurs processeurs d'un dispositif, amènent le dispositif à effectuer des opérations comprenant :

la génération d'informations de contact qui décrivent un geste effectué par un premier élément du corps avec le dispositif alors que le dispositif présente des informations visuelles dans un mode saisir-et-déplacer, dans lequel mode saisir-et-déplacer les informations visuelles sont présentées pour se déplacer avec le premier élément du corps par rapport à un écran du dispositif ; la génération d'autres informations de contact qui décrivent un autre contact par un autre élément du corps sur un écran tactile du dispositif pendant l'exécution du geste par le premier élément du corps ; la génération d'un signal d'effet haptique qui spécifie des informations haptiques qui correspondent à un élément inclus dans les informations visuelles présentées par le dispositif, dans lequel la génération du signal d'effet haptique est effectuée par lesdits un ou plusieurs processeurs du dispositif sur la base des informations de contact qui décrivent le contact par l'autre élément du corps avec le dispositif ; et la présentation des informations haptiques spécifiées par le signal d'effet haptique, dans lequel la présentation des informations haptiques amène l'élément inclus dans les informations visuelles présentées par le dispositif à être perceptible de manière tactile par l'élément du corps ; et l'entrée dans un mode tenir-et-sentir lors de la détection dudit geste effectué par le premier élé-

**EP 2 732 355 B1**

ment du corps ; dans lequel mode tenir-et-sentir l'afficheur haptique est configuré pour présenter les informations visuelles fixes par rapport à l'écran du dispositif.

*FIG. 1*

*FIG. 2*

*FIG. 3*

EP 2 732 355 B1

*FIG. 4*

*FIG. 5*

*FIG. 6*

EP 2 732 355 B1

GESTURAL CONTROL SURFACE

SENSEG-BRAILLE

*FIG. 7*

DNSK — 81

82

85  84

80

86  å  ä  á

83

24

E  R  T

D  F

Z  X  C  V

*FIG. 8*

EP 2 732 355 B1

DæNSK — 81

E  R  T

å
â
æ  83
D  F

Z  X  C  V

84
80
85
86
24

*FIG. 9*

EP 2 732 355 B1

SYSTEM - GENERAL PRINCIPLE

STRONG ELECTRICAL FIELD BETWEEN FINGER AND TIXEL CREATES PHYSICAL FORCE

POTENTIAL DIFFERENCE FORCED ON DIFFERENT DEVICE SIDES

USER BODY CAPACITIVELY CONNECTED TO DEVICE GROUND

*FIG. 10*

FRICTION

FIELD FORCE

FORCE

d, V

$$F = e\,\frac{V^2}{d^2}$$

CHARGE IN
TIXEL LAYERS

OPPOSITE CHARGE
IN FINGER TISSUE

*FIG. 11*

EP 2 732 355 B1

# SYSTEM - COMPONENTS

## TIXEL

- ○ THE SURFACE PROVIDING USER WITH EFFECT ON TOP-SIDE OF DEVICE COVER LENS

## ELECTRONICS MODULE

- ○ COMMUNICATES WITH THE HOST, CREATES THE HIGH-VOLTAGE SIGNAL

## TP ISOLATOR MODULE

- ○ ISOLATES INPUT DEVICE GALVANICALLY FROM REST OF THE SYSTEM

*FIG. 12*

EP 2 732 355 B1

## SYSTEM - INPUT-DRIVEN CONFIGURATION

*FIG. 13*

**SYSTEM - INPUT-DRIVEN CONFIGURATION**

TIXEL COATINGS

INSULATOR/ HARD COAT

CHARGE DISSIPATIVE LAYER

ISOLATED INPUT DEVICE

COVER GLASS

INPUT DEVICE SENSOR

HV SIGNAL DRIVEN TO
INPUT DEVICE GROUND (ISOLATED)

LCD PANEL

GROUND BACK PLATE PLACED CLOSE TO USERS HAND
CAN ALSO ACT AS EMI SHIELD

GROUNDING BACK

DEVICE COVER

*FIG. 14*

EP 2 732 355 B1

HOST

12C

INPUT DEVICE ELECTRONICS

TIXEL ON COVER GLASS

CAPACITIVE SENSOR

12C

SENSEG ELECTRONICS

HIGH-VOLTAGE SIGNAL

CAPACITIVE GROUNDING INSIDE DEVICE BACK COVER

SYSTEM GROUND

*FIG. 15*

HV SIGNAL TO BACK TIXEL

FRONT TIXEL CAPACATIVE-
CONNECTED TO DEVICE GROUND

DEVICE GROUND POTENTIAL PROBLEM
-> PLASTIC COVERS
-> ISOLATED PERIPHERALS

INSULATOR/
HARD COAT

CHARGE
DISSIPATIVE
LAYER

COVER GLASS

LCD PANEL AND
INPUT SENSOR

BACK TIXEL

DEVICE COVER

*FIG. 16*

EP 2 732 355 B1

*FIG. 17*

EP 2 732 355 B1

Vcc ——

DATA ——

| ISOLATOR |
| (BOTH SUPPLY VOLTAGES |
| AND SIGNALS) |

—— INPUT DEVICE

CHASSIS GND

FLOATING GND

Vcc ——

CONTROL ——

| HIGH VOLTAGE GENERATOR |
| (VOLTAGE MULTIPLIER WITH RELATIVELY HIGH |
| OUTPUT IMPEDANCE AT HIGHER FREQUENCIES) |

HV

CHASSIS GND

| ACTIVE GROUNDING CIRCUIT |
| (LOW IMPEDANCE AT HIGH |
| FREQUENCIES AND SMALL |
| AMPLITUDES; HIGH IMPEDANCE |
| AT LOW FREQUENCIES AND |
| LARGE AMPLITUDES) |

*FIG. 18*

**R1**

100k

**V1**

**C1**

10n

AC 10

.ac OCT 100 100 10meg

*FIG. 19*

*FIG. 20*

*FIG. 21*

*FIG. 22*

*FIG. 23*

*FIG. 24*

*FIG. 25*

*FIG. 26*

*FIG. 27*

*FIG. 28*

*FIG. 29*

400

120

402

403

404

316

CTRL

240

IN    OUT

*FIG. 30*

*FIG. 31*

600

610A   610D   610G

610B   610E   610H

610C   610F   610I

240

SWITCH   317

CTRL   316

*FIG. 32*

700

$U_1$        $U_2$

702        704

ELECTRODE ⊢⊢ FINGER    BODY ⊢⊢ SURROUNDING
$C_1$        $C_2$

e, Q  ⊕ — 706

*FIG. 33*

*FIG. 34*

6000

120

252

6002

254

V1

V2

6008

6009

6006

Controller 6004

*FIG. 35*

FIG. 36

*FIG. 37*

*FIG. 38*

120

902'

252

254

1004

*FIG. 39*

*FIG. 40*

FIG. 41

FIG. 42

*FIG. 43*

EP 2 732 355 B1

*FIG. 44*

*FIG. 45*

1200

120

1242    1246

1201

1264

1226

1262
1222

1244    1224

1260          1240          1220

| TACTILE OUTPUT CONTROL | TOUCH INPUT CONTROL | DISPLAY CONTROL |

1202

BUS

1204          1206          1208

| MICROPR-OCESSOR | MEMORY:

PRESENCE DETECTION

STIMULUS VARIATION | SUPPORT CIRCUITRY |

1248

1268

*FIG. 46*

FIG. 47

FIG. 48

EP 2 732 355 B1

9000

9010

Generate contact information that describes contact by body member with device

9020

Generate haptic effects signal that specifies haptic information corresponding to element in visual information presented by device

9030

Present haptic information specified by a haptic effect signal to cause element in visual information to be tactilely perceivable

*FIG. 49*

*FIG. 50*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010231367 A1